# EUROPEAN PATENT APPLICATION

(11) **EP 4 726 533 A1**
(43) Date of publication of application: **15.04.2026**
(21) Application number: 24918058.9
(22) Date of filing: 29.08.2024
(51) Int. Cl.: G06F 8/38, G06F 8/34

(54) **CONTROL CENTER EDITING METHOD AND ELECTRONIC DEVICE**

(30) Priority: 17.01.2024 CN 202410071686
(71) Applicant: Huawei Technologies Co., Ltd., Shenzhen, Guangdong 518129 (CN)
(72) Inventor: HUANG, Jing, Shenzhen, Guangdong 518129 (CN); YAO, Liying, Shenzhen, Guangdong 518129 (CN)
(74) Representative: Grünecker Patent- und Rechtsanwälte PartG mbB
(86) International application number: PCT/CN2024/115548
(87) International publication number: WO 2025/152449

(57) **Abstract**

Disclosed are a method for editing in a control panel and an electronic device. In the method, when editing in a control panel of the electronic device is performed, a complete editing and preview interface of a plurality of editable areas included in the control panel may be directly displayed via an edit control. For example, one editable area may include a plurality of shortcut switches, and another editable area may include a smart device. This allows a user to view more complete editing and preview for the control panel in the editing and preview interface, reduce user operations, without separately performing editing by the user for different editing areas on corresponding level-2 interfaces, improve flexibility, intuitiveness, and convenience for editing in the control panel, and improve experience of using the control panel by the user.

## Description

### CROSS-REFERENCE TO RELATED APPLICATIONS

This application claims priority to Chinese Patent Application No. 202410071686.7, filed with the China National Intellectual Property Administration on January 17, 2024 and entitled "METHOD FOR EDITING IN CONTROL PANEL AND ELECTRONIC DEVICE", which is incorporated herein by reference in its entirety.

### TECHNICAL FIELD

Embodiments of this application relate to the field of terminal technologies, and in particular, to a method for editing in a control panel and an electronic device.

### BACKGROUND

An electronic device generally displays, in a control panel, some commonly used functions such as media broadcast, a shortcut switch, a smart device, and HyperTerminal, to improve convenience of a user operation. Currently, editing in the control panel may be presented in a form of a list in a setting application (application, APP). Therefore, an add operation, a delete operation, a drag operation, or the like in the setting APP can implement editing in the control panel. Alternatively, different function areas may be separately edited in level-2 interfaces. For example, an edit icon is tapped, and then an edit shortcut switch control is tapped, to display a level-2 interface, where the level-2 interface may include a shortcut switch displayed in the control panel and a shortcut switch not displayed in the control panel. This can edit a shortcut switch that can be displayed in the control panel. For another example, an edit icon is tapped, and then an edit smart device control is tapped, to display another level-2 interface, where the level-2 interface may be a level-2 interface including a smart device displayed in the control panel and a smart device not displayed in the control panel. This can edit a smart device that can be displayed in the control panel.

As the functions in the control panel are increasingly enriched, how to improve flexibility and convenience for editing in the control panel is of great significance.

### SUMMARY

Embodiments of this application provide a method for editing in a control panel and an electronic device, to improve flexibility and convenience for editing in the control panel.

According to a first aspect, an embodiment of this application provides a method for editing in a control panel. The method may be applied to an electronic device. In the method, a first operation instruction for an edit control included in the control panel interface is detected; and a first editing interface of a control panel is displayed in response to the first operation instruction, where the first editing interface includes a first editing area and a second editing area, the first editing area is used to edit a displayed shortcut switch, and the second editing area is used to edit a displayed smart device.

In the method, a complete editing and preview interface of the control panel can be directly displayed via the edit control included in the control panel. This allows a user to more intuitively view preview effect of a control panel obtained through editing, and view editing and preview effect of a plurality of editing areas in the editing and preview interface, without performing convenience in corresponding level-2 interfaces by the user for different editing areas, reduce complexity of a user operation, and improve flexibility and convenience for editing in the control panel.

In a possible design, the first editing interface further includes a first half-screen interface, the first half-screen interface includes one or more of the following items: at least one candidate shortcut switch and at least one candidate combined shortcut switch, and the candidate shortcut switch and the candidate combined shortcut switch are not displayed in the control panel interface.

In this design, when a control panel in an editing state is displayed, it is considered that each editing area of the control panel may further include some candidate content that is not displayed in the control panel but can be displayed through an operation. Therefore, when the editing and preview interface is displayed, a candidate library interface corresponding to a default editing area may be directly displayed in a half-screen form. This can provide a more intuitive editing and preview interface for the user to perform editing in the control panel.

In this application, an interface in the half-screen form means that current display content in the interface does not occupy all screen display areas, and other content may be further displayed in a screen display area that is not occupied by the interface. Generally, the content is located at different layers. For example, a common implementation is that the interface in the half-screen form covers another interface, and covers a part of content in the another interface. It should be noted that, only the name of "half-screen" is used in this application, and does not intend to restrict that a size of the half-screen interface needs to be half of a current screen. The interface in the half-screen form may be any size less than a size of the screen display area.

It may be understood that, in this embodiment of this application, shortcut switches in a combined form may be further provided, and in the following designs, widgets in a combined form, smart devices in a combined form, and the like may be further provided. This can provide a more enriched control panel, meet user habits in more scenarios, and further improve efficiency of using the control panel by the user.

In a possible design, the method further includes: in response to a slide operation on the first editing interface, displaying the first half-screen interface when the first editing area is displayed in an initial display area of the first editing interface, where the first half-screen interface includes at least one of the at least one candidate shortcut switch and the at least one candidate combined shortcut switch, and the candidate shortcut switch and the candidate combined shortcut switch are not displayed in the control panel interface.

In this design, candidate libraries corresponding to different editing areas may be further synchronously switched through the slide operation performed by the user on the editing and preview interface. For example, a candidate library corresponding to an editing area located at an initial display position in the editing and preview interface may be displayed in a half-screen interface manner. This can implement flexible switching of the candidate library, and further improve intuitiveness and convenience for editing in the control panel.

In a possible design, the first editing area further includes a first add control, and the method further includes: displaying the first half-screen interface in the first editing interface in response to a second operation instruction for the first add control, where the first half-screen interface includes at least one of the at least one candidate shortcut switch and the at least one candidate combined shortcut switch, and the candidate shortcut switch and the candidate combined shortcut switch are not displayed in the control panel interface.

In this design, the candidate library corresponding to the editing area may be triggered in a plurality of operation manners for display. Optionally, the operation manner may be determined based on an operation manner customized by the user. For example, if the user sets that the candidate library is synchronously displayed when the editing and preview interface is displayed, the candidate library may be automatically switched in response to the slide operation performed by the user on the editing and preview interface. For another example, if the user sets a control wakeup manner, the electronic device may display the candidate library interface in response to an operation on an add control corresponding to the editing area when detecting the operation performed by the user on the control.

In a possible design, the method further includes: displaying a second editing interface in response to an add operation instruction for a first candidate shortcut switch or a first candidate combined shortcut switch included in the first half-screen interface, where the add operation instruction instructs to add the first candidate shortcut switch or the first candidate combined shortcut switch to the first editing area, and the first editing area included in the second editing interface include the first candidate shortcut switch or the first candidate combined shortcut switch.

In this design, content, for example, a shortcut switch or a combined shortcut switch, may be added to the control panel in the editing and preview interface and by using the candidate library displayed in the half-screen form.

In a possible design, the method further includes: displaying a third editing interface in response to a delete operation instruction for a first shortcut switch or a first combined shortcut switch included in the first editing interface, and displaying the first shortcut switch or the first combined shortcut switch in the first half-screen interface, where the first shortcut switch or the first combined shortcut switch is no longer displayed in the third editing interface.

In this design, in the editing and preview interface, lightweight editing for display content included in the control panel may be further implemented, for example, the display content is deleted, and preview for a control panel obtained through editing may be implemented. This can improve convenience for editing in the control panel by the user.

In a possible design, the method further includes: in response to a slide operation on the first editing interface, displaying a second half-screen interface when the second editing area is displayed in the initial display area of the first editing interface, where the second half-screen interface includes at least one of at least one candidate smart device and at least one candidate combined smart device, and the candidate smart device and the candidate combined smart device are not displayed in the control panel interface.

In this design, candidate libraries corresponding to different editing areas may be synchronously switched through the slide operation performed by the user on the editing and preview interface. For example, a candidate library corresponding to an editing area located at an initial display position in the editing and preview interface may be displayed by default. This can implement flexible switching of the candidate library, and further improve intuitiveness and convenience for editing in the control panel.

In a possible design, the second editing area further includes a second add control, and the method further includes: displaying the second half-screen interface in the first editing interface in response to a third operation instruction for the second add control, where the second half-screen interface includes at least one of the at least one candidate smart device and the at least one candidate combined smart device, and the candidate smart device and the candidate combined smart device are not displayed in the control panel interface.

In this design, the candidate library corresponding to the editing area may be triggered in a plurality of operation manners for display. Optionally, the operation manner may be determined based on an operation manner customized by the user. For example, if the user sets that the candidate library is synchronously displayed when the editing and preview interface is displayed, the candidate library may be automatically switched in response to the slide operation performed by the user on the editing and preview interface. For another example, if the user sets a control wakeup manner, the electronic device may display the candidate library interface in response to an operation on an add control corresponding to the editing area when detecting the operation performed by the user on the control.

In a possible design, the method further includes: displaying a fourth editing interface in response to an add operation instruction for a first candidate smart device or a first candidate combined smart device included in the second half-screen interface, where the add operation instruction instructs to add the first candidate smart device or the first candidate combined smart device to the second editing area, and the second editing area included in the fourth editing interface includes the first candidate smart device or the first candidate combined smart device.

In this design, content, for example, a shortcut switch or a combined shortcut switch, may be added to the control panel in the editing and preview interface and by using the candidate library displayed in the half-screen form.

In a possible design, the method further includes: displaying a fifth editing interface in response to a delete operation instruction for a first smart device or a first combined smart device included in the first editing interface, and displaying the first smart device or the first combined smart device in the second half-screen interface, where the first smart device or the first combined smart device is no longer displayed in the fifth editing interface.

In this design, in the editing and preview interface, lightweight editing for display content included in the control panel may be further implemented, for example, the display content is deleted, and preview for a control panel obtained through editing may be implemented. This can improve convenience for editing in the control panel by the user.

In a possible design, the first editing interface further includes a third editing area, and the third editing area is used to edit a displayed widget.

In this design, as functions in the control panel are increasingly enriched, not only a shortcut switch area and a smart device area can be edited, but also a widget area can be edited. It may be understood that when the control panel includes more areas, the more areas may be further edited.

In a possible design, the method further includes: in response to a slide operation on the first editing interface, displaying a third half-screen interface when the third editing area is displayed in the initial display area of the first editing interface, where the third half-screen interface includes at least one of at least one candidate widget and at least one candidate combined widget, and the candidate widget and the candidate combined widget are not displayed in the control panel interface.

In this design, candidate libraries corresponding to different editing areas may be further synchronously switched through the slide operation performed by the user on the editing and preview interface. For example, a candidate library corresponding to an editing area located at an initial display position in the editing and preview interface may be displayed by default. This can implement flexible switching of the candidate library, and further improve intuitiveness and convenience for editing in the control panel.

In a possible design, the third editing area further includes a third add control, and the method further includes: displaying the third half-screen interface in the first editing interface in response to a fourth operation instruction for the third add control, where the third half-screen interface includes at least one of the at least one candidate widget and the at least one candidate combined widget, and the candidate widget and the candidate combined widget are not displayed in the control panel interface.

In this design, the candidate library corresponding to the editing area may be triggered in a plurality of operation manners for display. Optionally, the operation manner may be determined based on an operation manner customized by the user. For example, if the user sets that the candidate library is synchronously displayed when the editing and preview interface is displayed, the candidate library may be automatically switched in response to the slide operation performed by the user on the editing and preview interface. For another example, if the user sets a control wakeup manner, the electronic device may display the candidate library interface in response to an operation on an add control corresponding to the editing area when detecting the operation performed by the user on the control.

In a possible design, the method further includes: displaying a sixth editing interface in response to an add operation instruction for a first candidate widget or a first candidate combined widget included in the third half-screen interface, where the add operation instruction instructs to add the first candidate widget or the first candidate combined widget to the third editing area, and the third editing area included in the sixth editing interface includes the first candidate widget or the first candidate combined widget.

In this design, content, for example, a shortcut switch or a combined shortcut switch, may be added to the control panel in the editing and preview interface and by using the candidate library displayed in the half-screen form.

In a possible design, the method further includes: displaying a seventh editing interface in response to a delete operation instruction for a first widget or a first combined widget included in the first editing interface, and displaying the first widget or the first combined widget in the third half-screen interface, where the first widget or the first combined widget is no longer displayed in the seventh editing interface.

In this design, in the editing and preview interface, lightweight editing for display content included in the control panel may be further implemented, for example, the display content is deleted, and preview for a control panel obtained through editing may be implemented. This can improve convenience for editing in the control panel by the user.

In a possible design, the method further includes: displaying an eighth editing interface in response to a fifth operation instruction in the first editing interface, where the fifth operation instruction instructs to display a first display object at a first display position, display positions of M display objects included in the eighth editing interface are different from display positions in the first editing interface, and the M display objects are determined based on an original display position of the first display object and the first display position; and the first display object includes a second shortcut switch or a second candidate shortcut switch, or a second combined shortcut switch or a second candidate shortcut switch, or a second smart device or a second candidate smart device, or a second combined smart device or a second candidate combined smart device, where M is a positive integer.

In this design, in the editing and preview interface, lightweight editing for display content included in the control panel may be further implemented, for example, a display position of the display content is changed, and preview for a control panel obtained through editing may be implemented. This can improve convenience for editing in the control panel by the user.

In a possible design, the M display objects are display objects that are located in a same column as the first display position.

In this design, a vertical squeezing or padding manner may be used to implement automatic editing at display positions in a same column. In this way, in an editing process of the user, an original layout of the control panel is not greatly changed, and editing experience of the user is ensured.

In a possible design, the method further includes: displaying a ninth editing interface in response to a sixth operation instruction in the first editing interface, where the fifth operation instruction instructs to display a second display object at a second display position, the second display object is displayed at a third display position in the ninth editing interface, and the second display object is not capable of being displayed at the second display position; and the second display object includes a third shortcut switch or a third candidate shortcut switch, or a third combined shortcut switch or a third candidate shortcut switch, or a third smart device or a third candidate smart device, or a third combined smart device or a third candidate combined smart device. Optionally, there is no idle display area in a column in which the second display position is located. In a possible design, the third display position is a display position that is in a plurality of idle display areas and that is closest to the second display position.

In this design, when the display content is added or the position of the display content is moved, and squeezing cannot be performed in a vertical direction, a closer display position may be automatically recommended for the user for display. In this way, the user may be assisted in editing in the control panel, and a large change to the original layout of the control panel may be reduced.

In a possible design, the method further includes: displaying a tenth editing interface in response to a delete operation instruction for a third display object included in the first editing interface, where display positions of N display objects included in the tenth editing interface are different from display positions in the first editing interface, the N display objects are display objects that are located in a same column of the third display object and that are below a display position of the third display object, and a quantity of columns in which the N display objects are located is less than or equal to a quantity of columns in which the third display object is located; and the third display object includes a fourth shortcut switch or a fourth candidate shortcut switch, or a fourth combined shortcut switch or a fourth candidate shortcut switch, or a fourth smart device or a fourth candidate smart device, or a fourth combined smart device or a fourth candidate combined smart device, where N is a positive integer.

In this design, in a scenario in which the display content of the control panel is deleted, a vertical padding manner may be used to implement automatic editing at display positions in a same column. In this way, in an editing process of the user, an original layout of the control panel is not greatly changed, and editing experience of the user is ensured.

According to a second aspect, an embodiment of this application provides a method for editing in a control panel. The method may be applied to an electronic device. In the method, a first operation instruction for an edit control included in the control panel interface is detected; and a first editing interface of a control panel is displayed in response to the first operation instruction, where the first editing interface includes a first editing area, a second editing area, and a third editing area, the first editing area is used to edit a displayed shortcut switch, the second editing area is used to edit a displayed smart device, and the third editing area is used to edit a displayed widget; and the first editing interface further includes a first half-screen interface or a third half-screen interface, the first half-screen interface includes at least one of at least one candidate shortcut switch and at least one candidate combined shortcut switch, and the candidate shortcut switch and the candidate combined shortcut switch are not displayed in the control panel interface; the third half-screen interface includes at least one of at least one candidate widget and at least one candidate combined widget, and the candidate widget and the candidate combined widget are not displayed in the control panel interface.

In the method, a complete editing and preview interface of the control panel can be directly displayed via the edit control included in the control panel, and a candidate library interface can be directly displayed in the editing and preview interface. This can improve intuitiveness of the editing and preview interface, and improve portability and flexibility for editing in the control panel by a user.

In a possible design, the third editing area is displayed above the first editing area, the first editing area is displayed above the second editing area, and the method further includes: in response to a slide operation on the first editing interface, displaying the first half-screen interface when it is detected that the third editing area is no longer displayed in the first editing interface; and displaying a second half-screen interface when it is detected that the first editing area is no longer displayed in the first editing interface, where the second half-screen interface includes at least one of at least one candidate smart device and at least one candidate combined smart device, and the candidate smart device and the candidate combined smart device are not displayed in the control panel interface.

In this design, candidate libraries corresponding to different editing areas may be synchronously switched through the slide operation performed by the user on the editing and preview interface. For example, a candidate library corresponding to an editing area located at an initial display position in the editing and preview interface may be displayed by default. This can implement flexible switching of the candidate library, and further improve intuitiveness and convenience for editing in the control panel.

It should be understood that, the content included in the plurality of editing areas of the control panel in the foregoing embodiments is merely an example for description. A person skilled in the art may easily make changes such as content update or sequence modification to the content included in the plurality of editing areas based on the solution provided in this application, an actual requirement, or a technical development, and shall also fall within the protection scope of this application.

According to a third aspect, this application provides an electronic device. The electronic device includes a plurality of functional modules. The plurality of functional modules interact with each other, to implement the method performed by the electronic device in any one of the foregoing aspects and the implementations of the foregoing aspects. The plurality of functional modules may be implemented based on software, hardware, or a combination of software and hardware, and the plurality of functional modules may be randomly combined or divided based on specific implementation.

According to a fourth aspect, this application provides an electronic device, including at least one processor and at least one memory. The at least one memory stores computer program instructions, and when the electronic device runs, the at least one processor performs the method performed by the electronic device in any one of the foregoing aspects and the implementations of the foregoing aspects.

According to a fifth aspect, this application further provides a computer-readable storage medium. The computer-readable storage medium stores a computer program, and when the computer program is executed by a computer, the computer is enabled to perform the method performed by the electronic device in any one of the foregoing aspects and the possible designs of the foregoing aspects.

According to a sixth aspect, this application provides a computer program product. The computer program product includes a computer program (which may also be referred to as code or instructions), and when the computer program is run, a computer is enabled to perform the method performed by the electronic device in any one of the foregoing aspects and the possible designs of the foregoing aspects.

According to a seventh aspect, an embodiment of this application further provides a graphical user interface on an electronic device. The electronic device has a display screen, one or more memories, and one or more processors, the one or more processors are configured to execute one or more computer programs stored in the one or more memories, and the graphical user interface includes a graphical user interface displayed when the electronic device performs any one of the foregoing aspects and the possible designs of the foregoing aspects.

According to an eighth aspect, this application further provides a chip. The chip is configured to read a computer program stored in a memory, to perform the method performed by an electronic device in any one of the foregoing aspects and the possible designs of the foregoing aspects.

According to a ninth aspect, this application further provides a chip system. The chip system includes a processor configured to support a computer apparatus in implementing the method performed by an electronic device in any one of the foregoing aspects and the possible designs of the foregoing aspects. In a possible design, the chip system further includes a memory, and the memory is configured to store a program and data that are necessary for the computer apparatus. The chip system may include a chip, or may include a chip and another discrete component.

For beneficial effect of any one of the third aspect to the ninth aspect and the possible designs of the third aspect to the ninth aspect, specifically refer to beneficial effect of the possible designs of the first aspect or the second aspect. Details are not described herein again.

### BRIEF DESCRIPTION OF DRAWINGS

FIG. 1A to FIG. 1E are a diagram of an interface of a control panel;
FIG. 2 is a diagram of a possible hardware structure of an electronic device according to an embodiment of this application;
FIG. 3 is a block diagram of a software architecture of an electronic device according to an embodiment of this application;

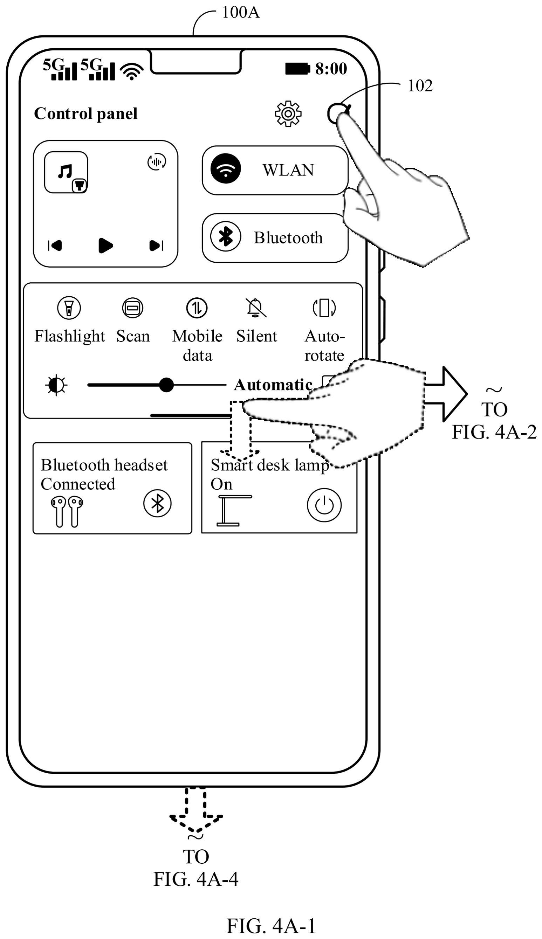

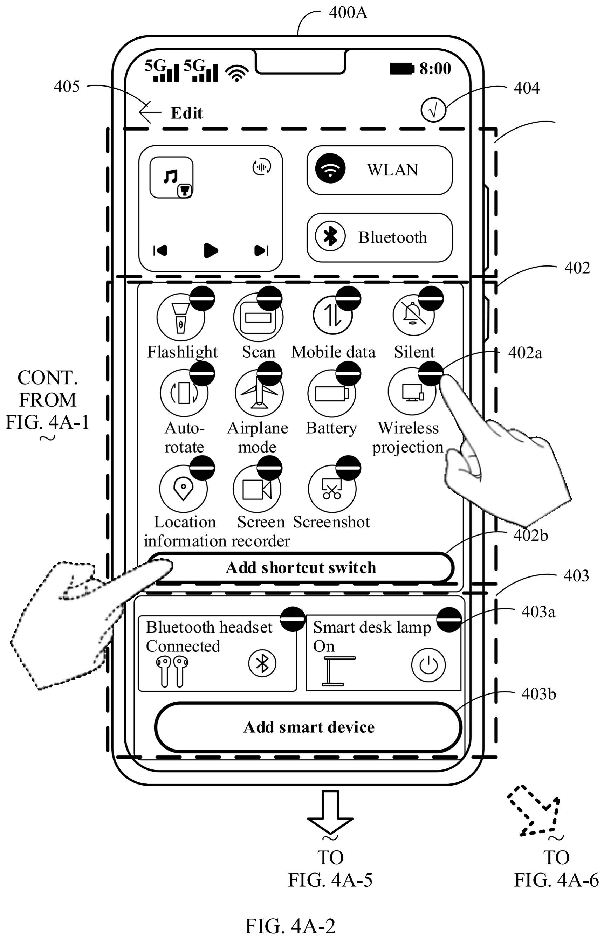

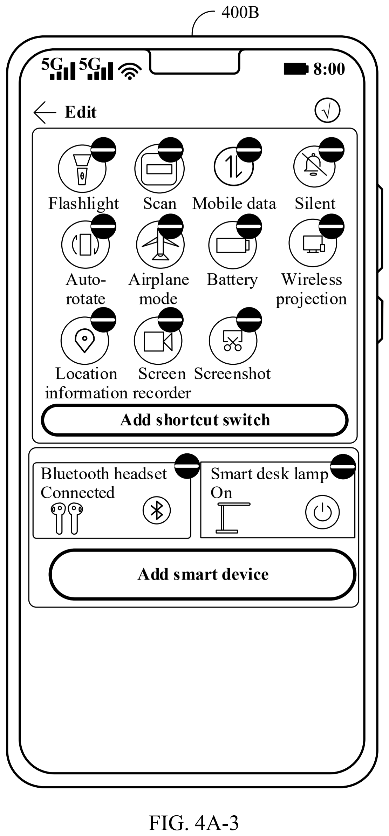

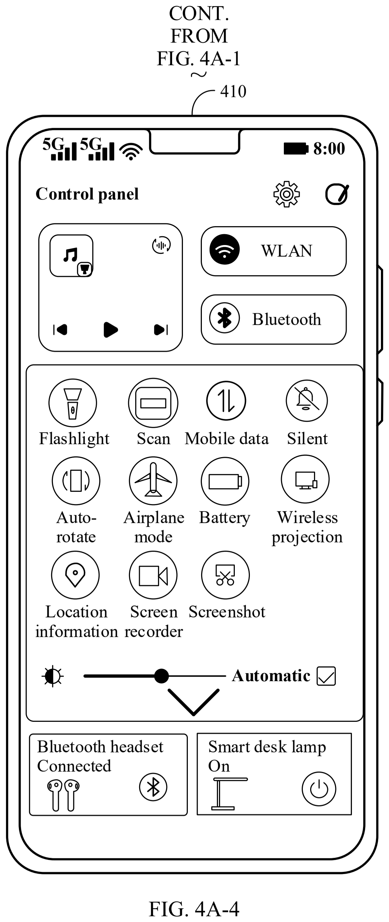

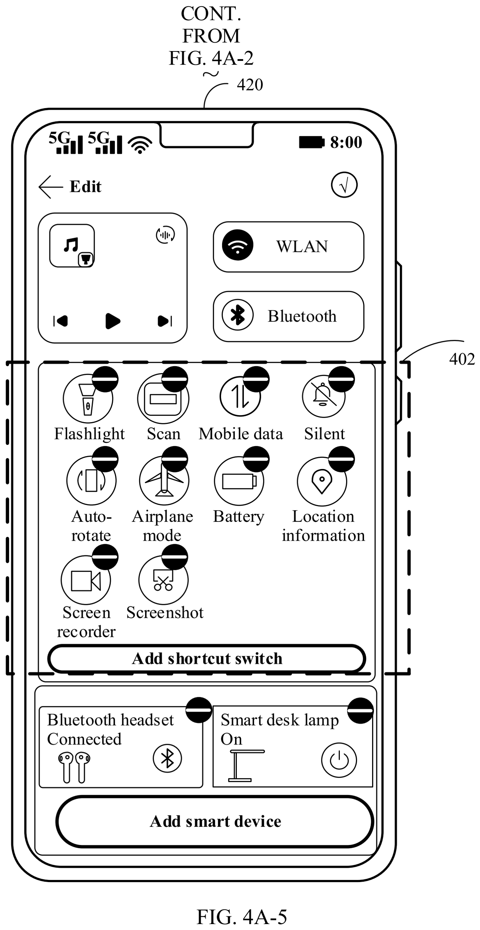

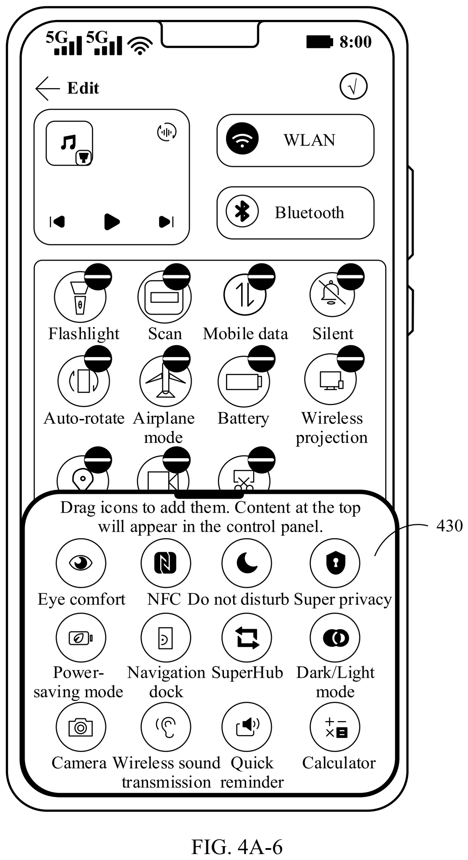

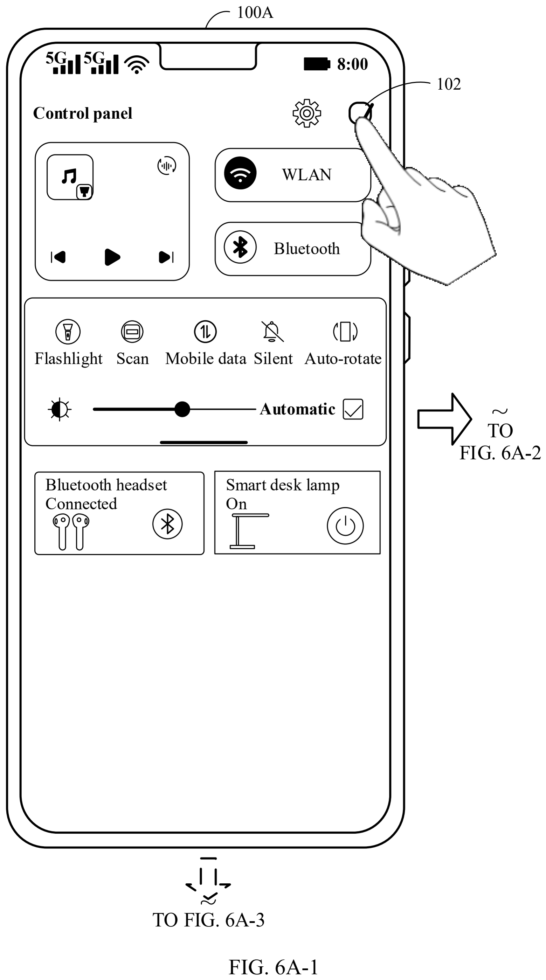

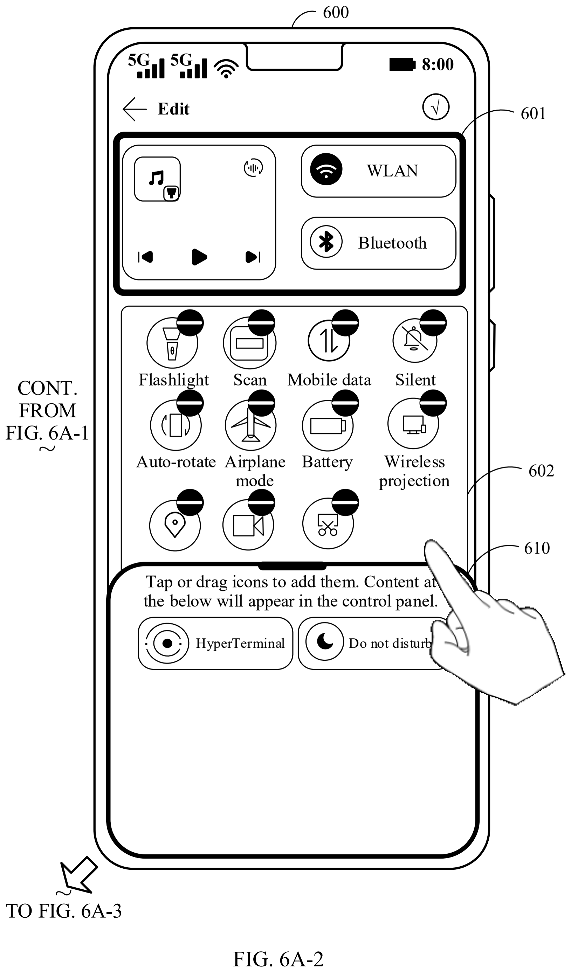

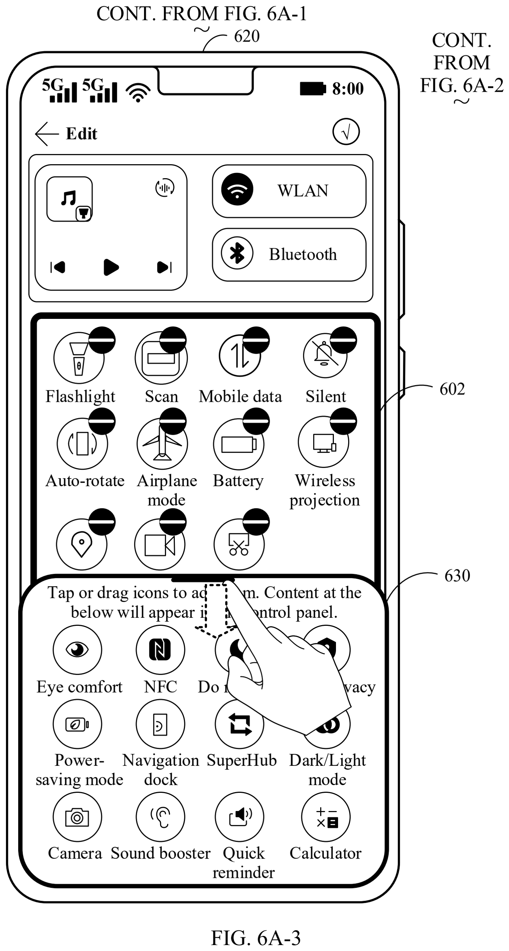

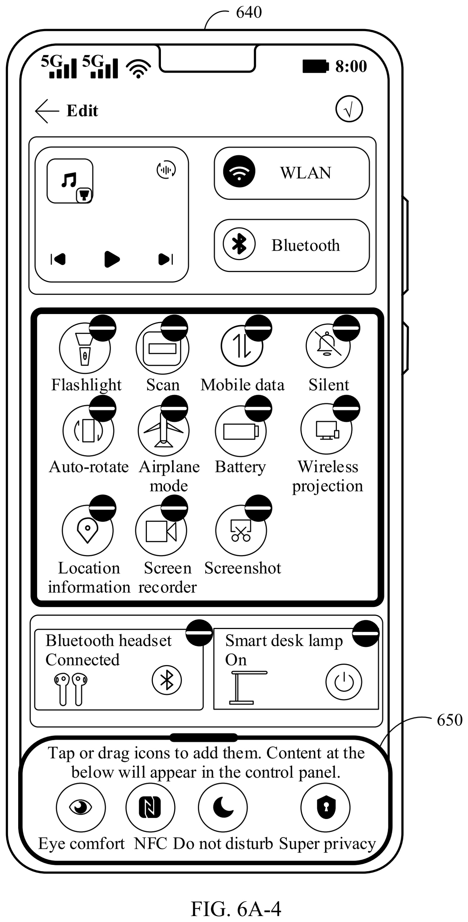

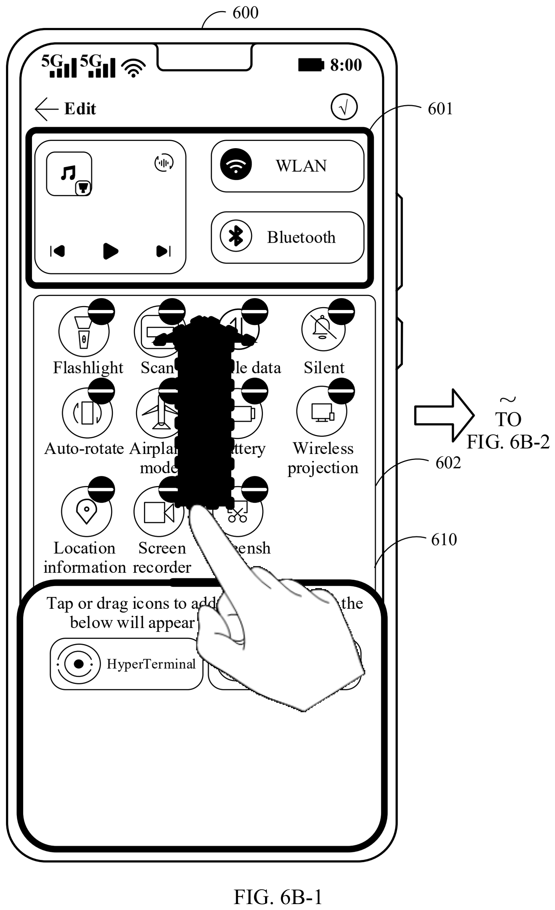

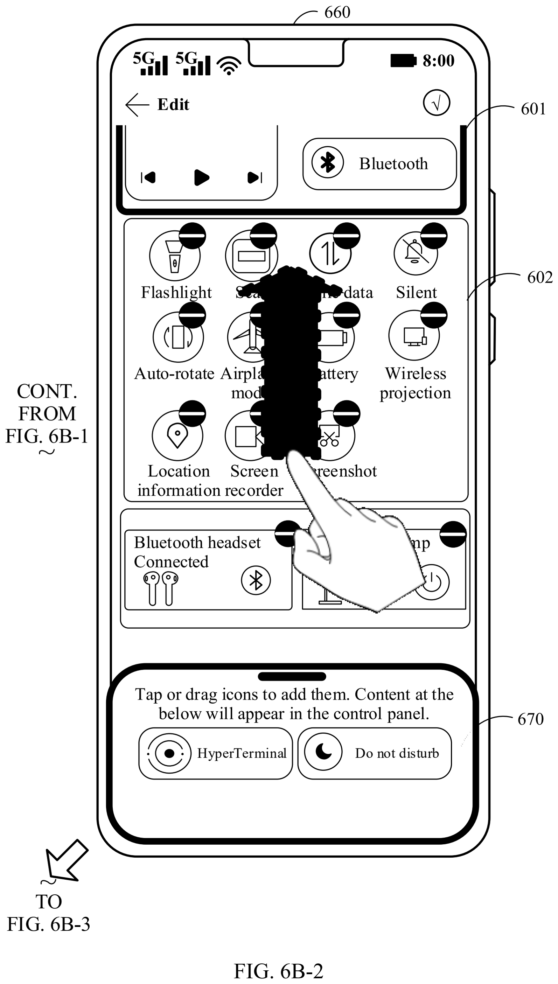

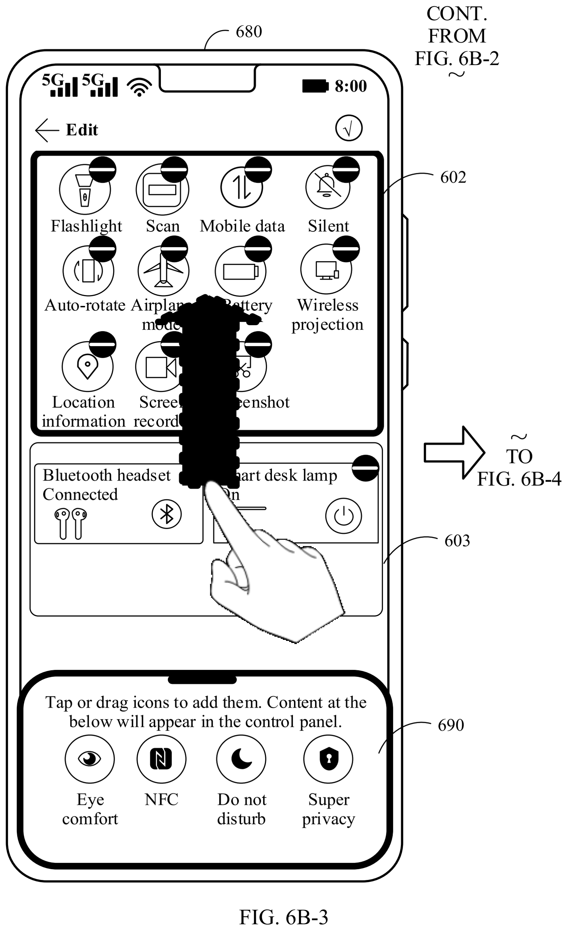

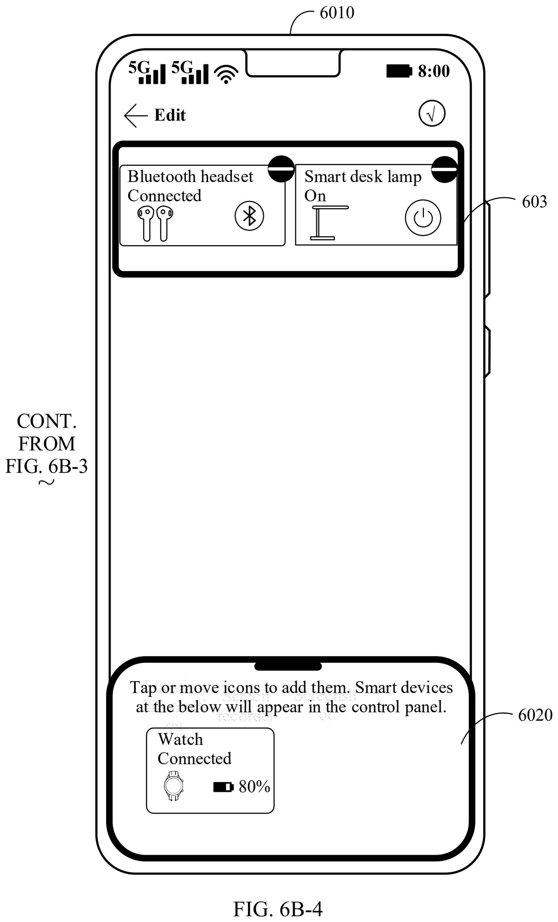

FIG. 4A-1 to FIG. 4A-6 are a diagram 1 of an editing interface of a control panel according to an embodiment of this application;

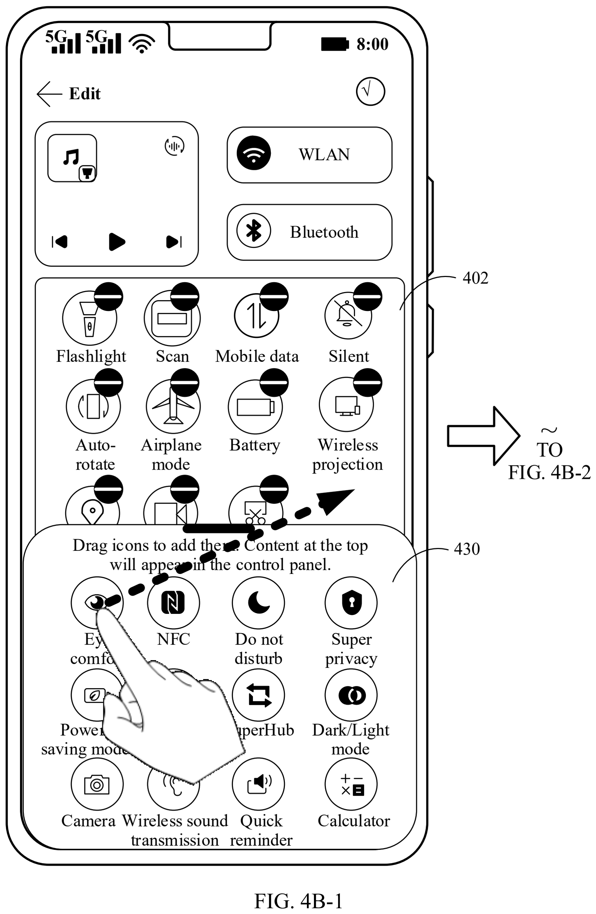

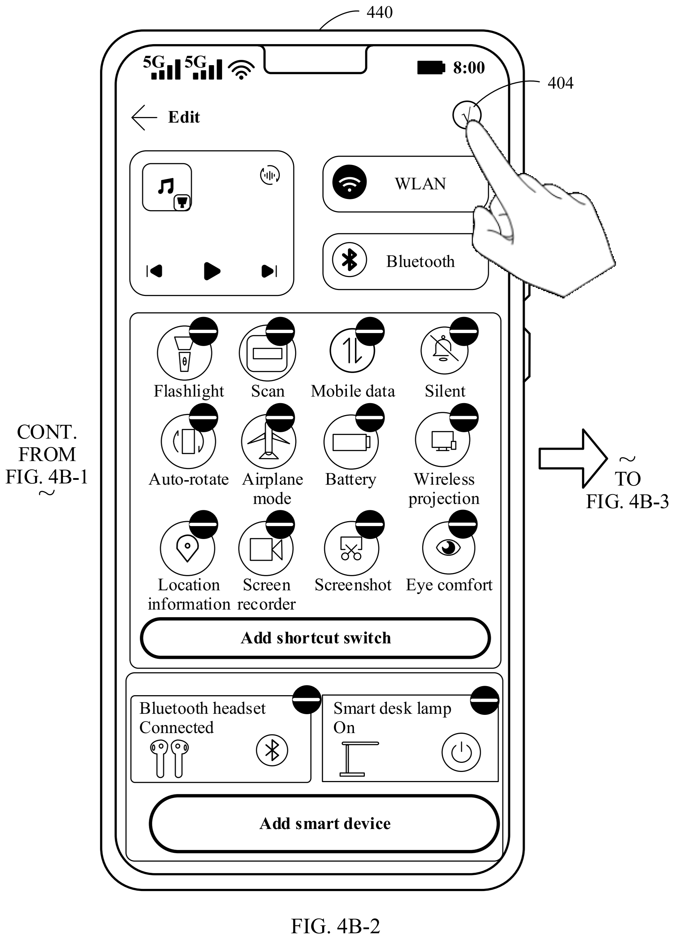

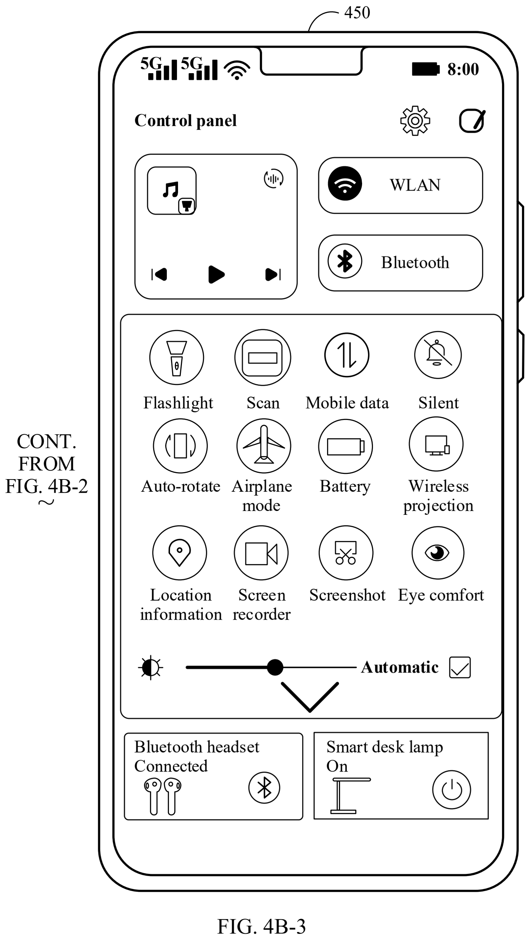

FIG. 4B-1 to FIG. 4B-3 are a diagram 2 of an editing interface of a control panel according to an embodiment of this application;

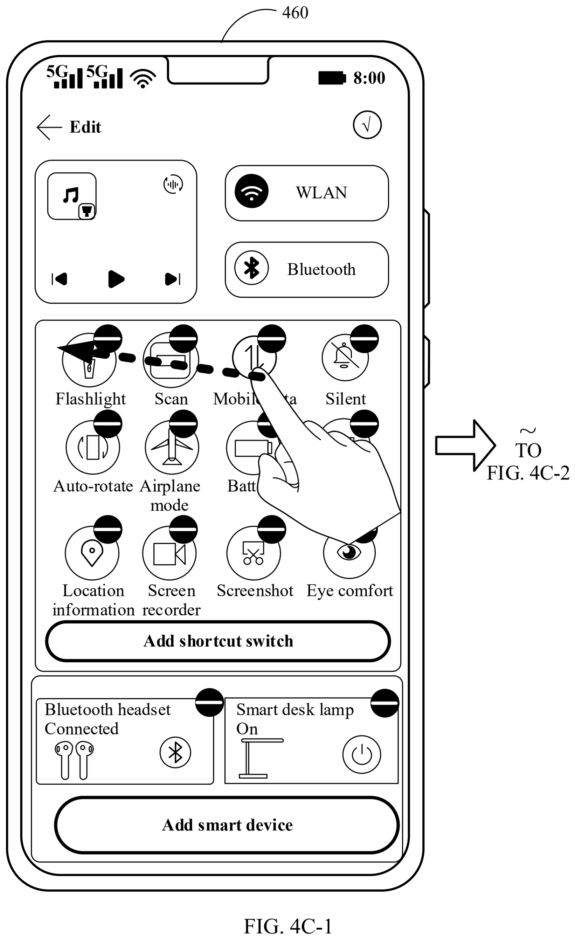

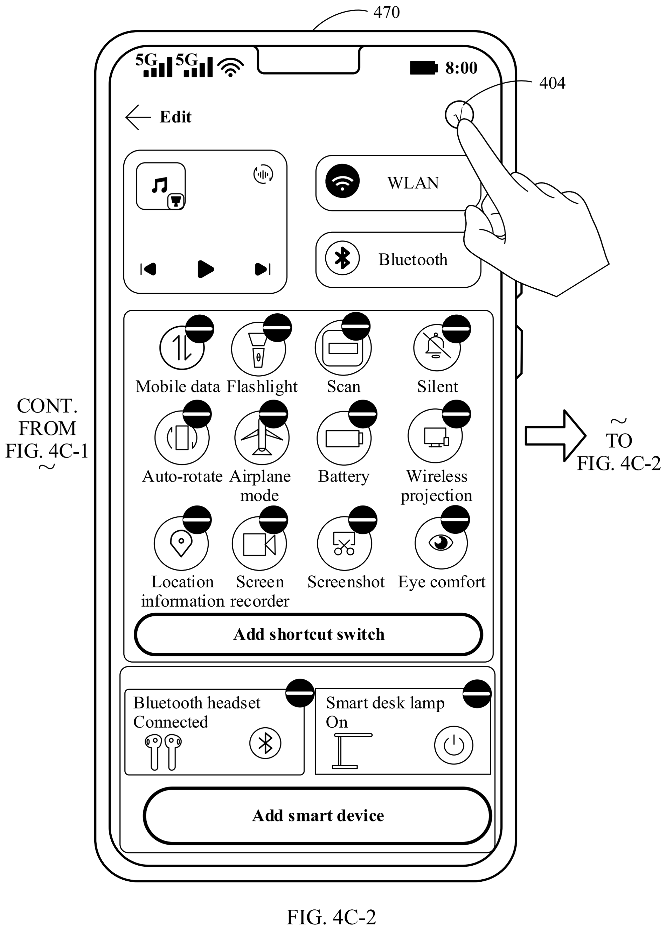

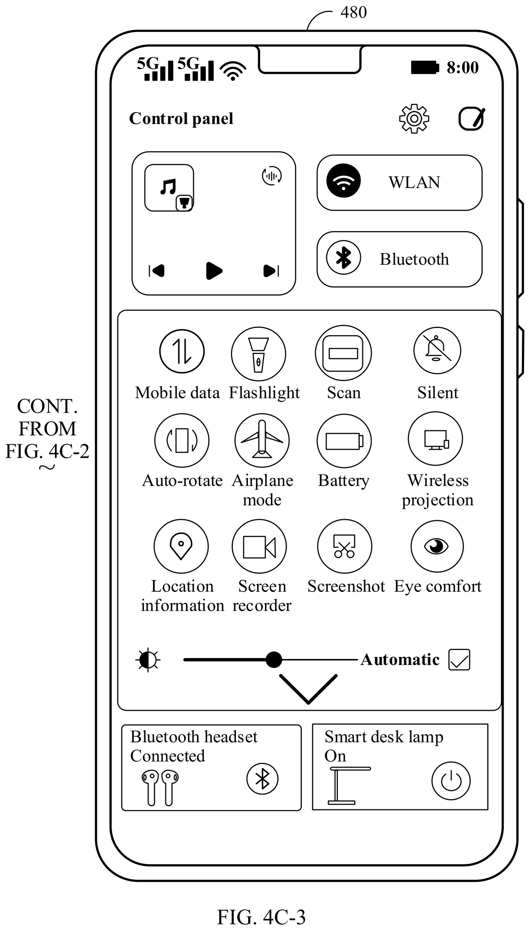

FIG. 4C-1 to FIG. 4C-3 are a diagram 3 of an editing interface of a control panel according to an embodiment of this application;

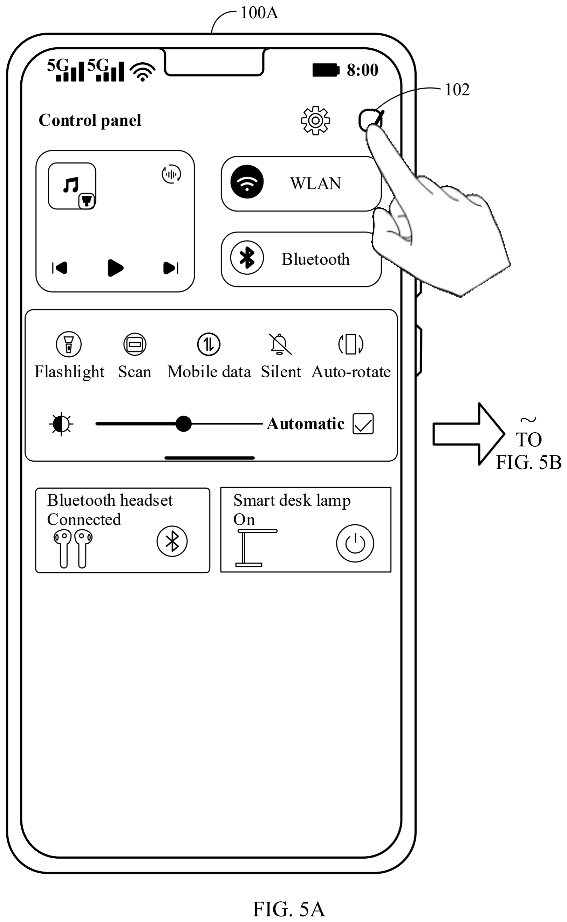

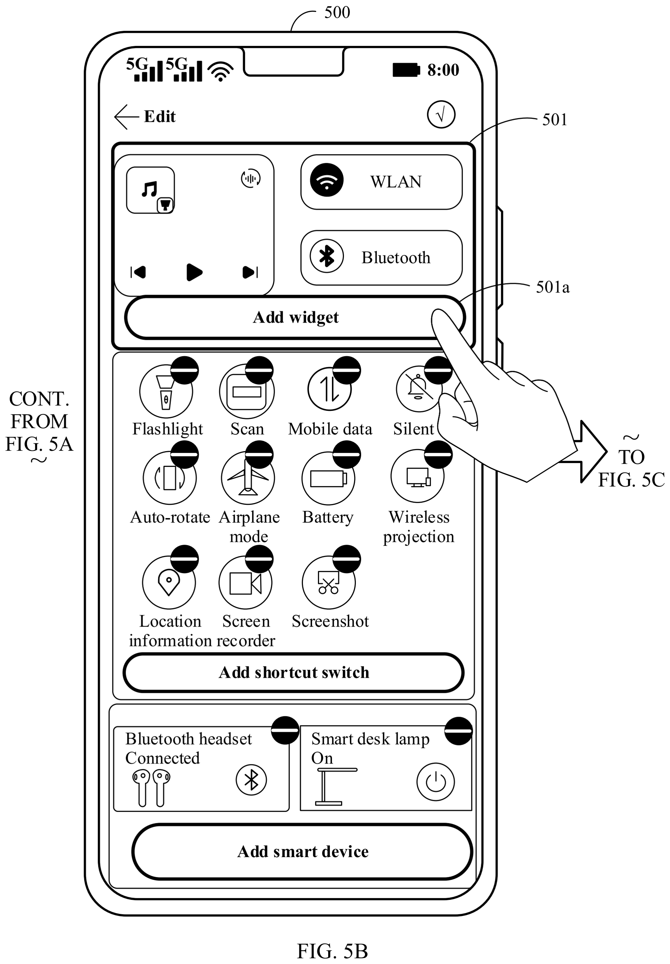

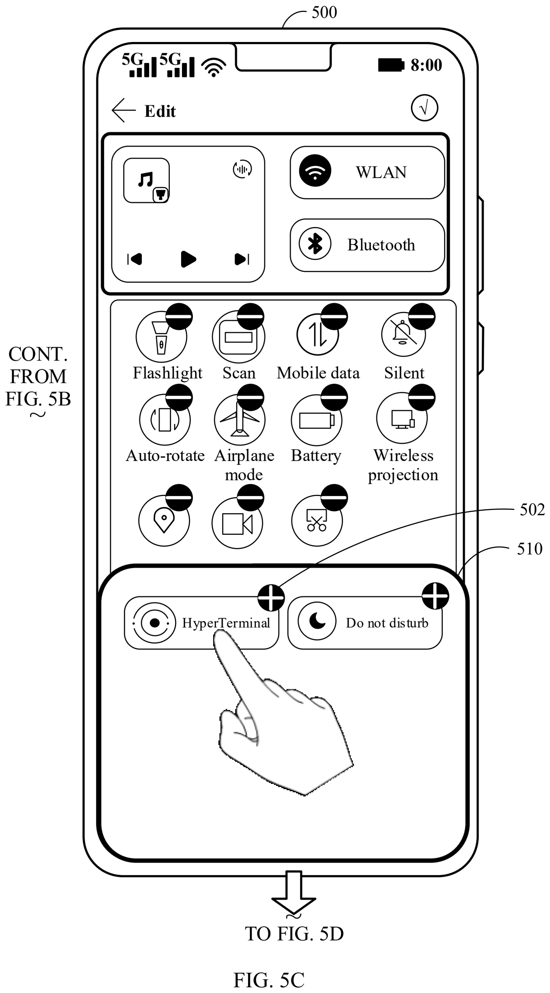

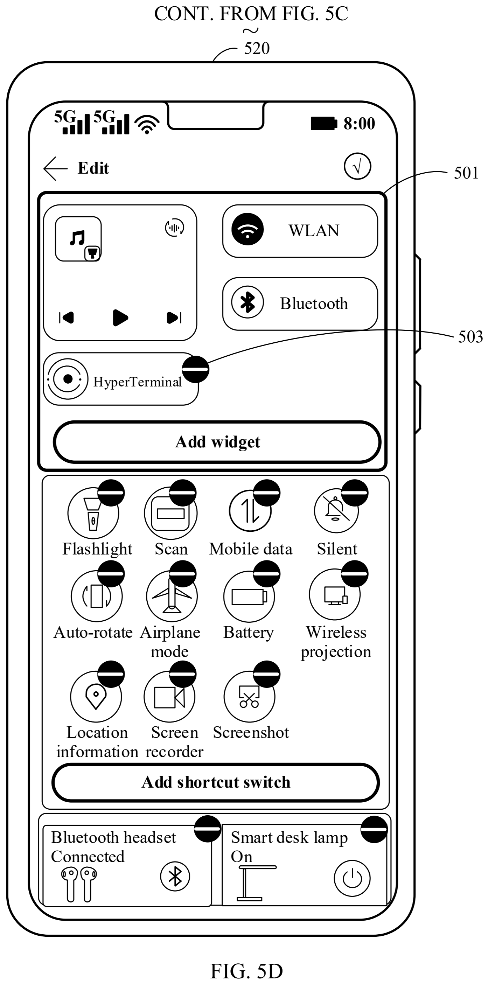

FIG. 5A to FIG. 5D are a diagram 4 of an editing interface of a control panel according to an embodiment of this application;
FIG. 6A-1 to FIG. 6A-4 are a diagram 5 of an editing interface of a control panel according to an embodiment of this application;
FIG. 6B-1 to FIG. 6B-4 are a diagram 6 of an editing interface of a control panel according to an embodiment of this application;

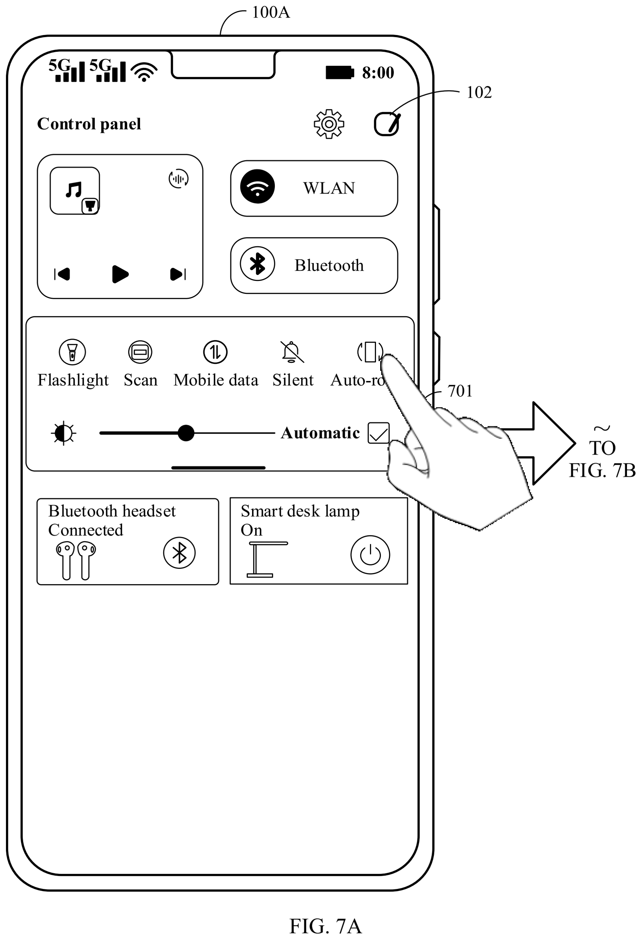

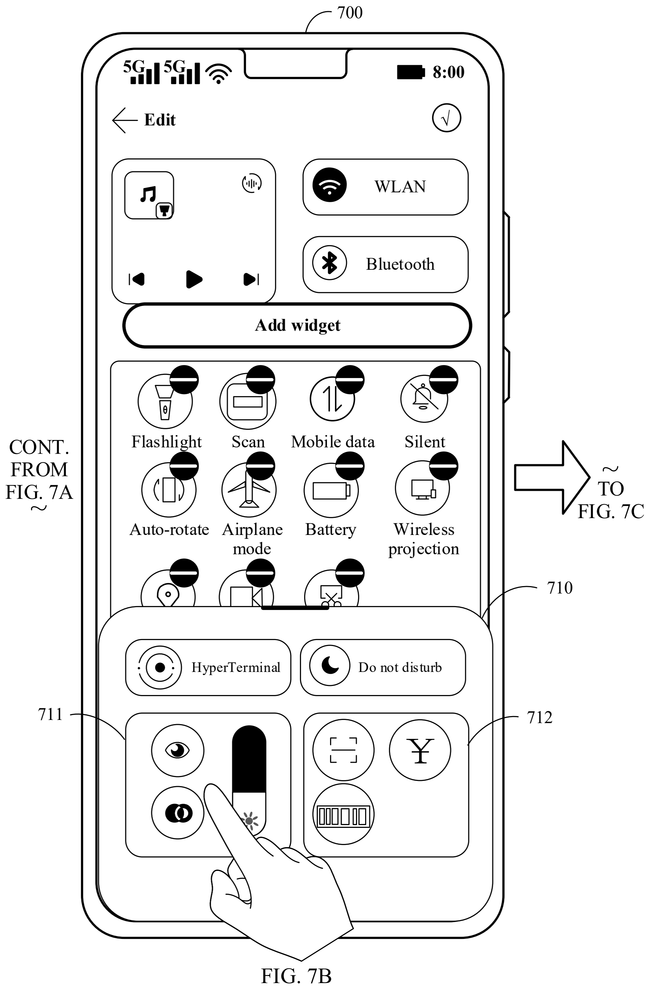

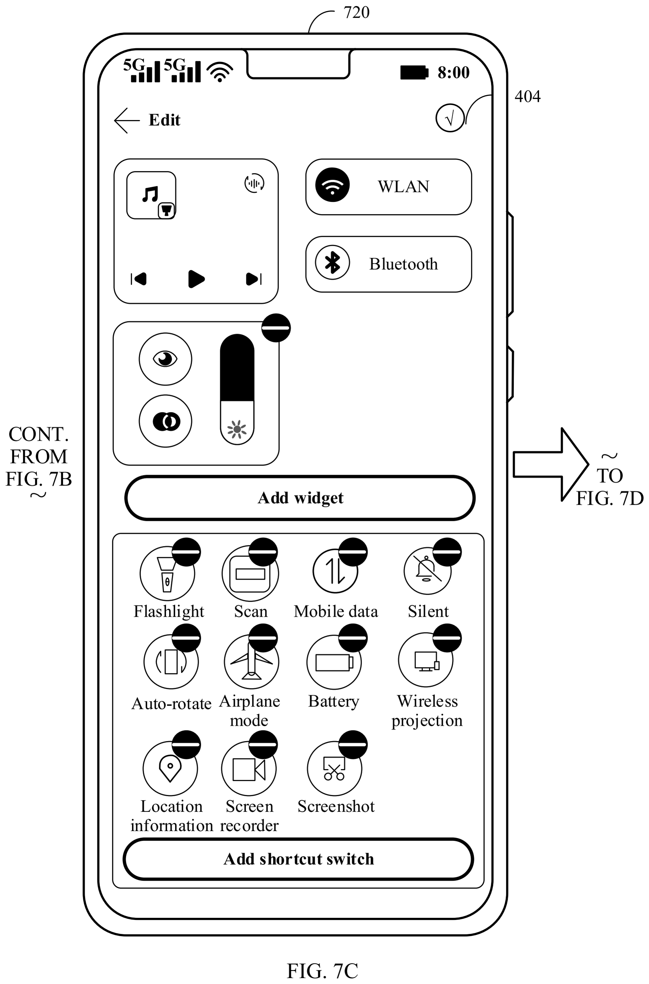

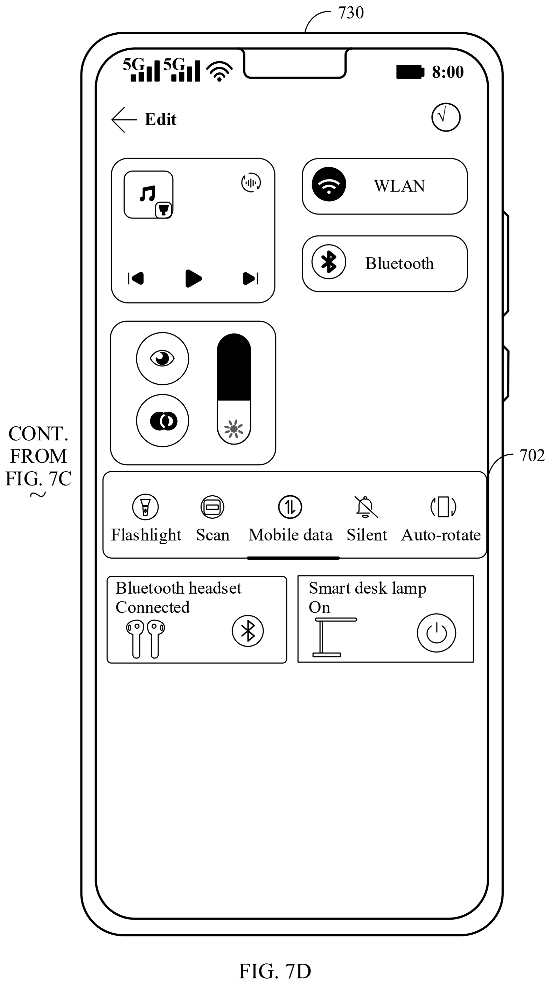

FIG. 7A to FIG. 7D are a diagram 7 of an editing interface of a control panel according to an embodiment of this application;

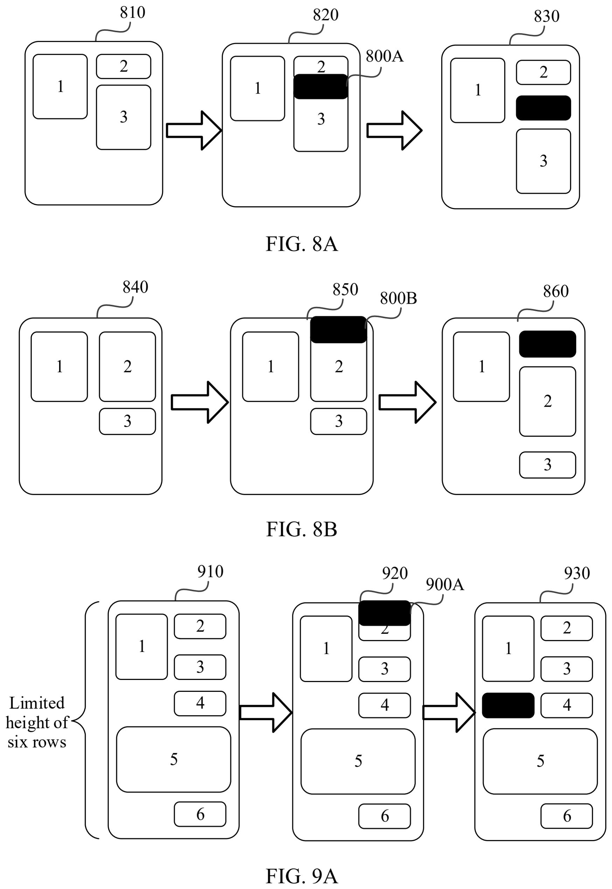

FIG. 8A is a diagram 1 of adjusting an editing layout of a control panel according to an embodiment of this application;
FIG. 8B is a diagram 2 of adjusting an editing layout of a control panel according to an embodiment of this application;
FIG. 9A is a diagram 3 of adjusting an editing layout of a control panel according to an embodiment of this application;

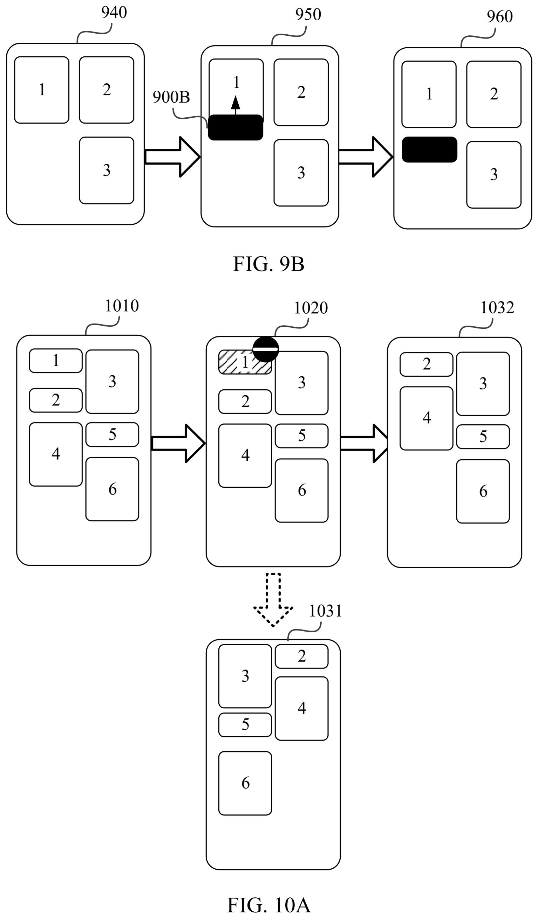

FIG. 9B is a diagram 4 of adjusting an editing layout of a control panel according to an embodiment of this application;
FIG. 10A is a diagram 5 of adjusting an editing layout of a control panel according to an embodiment of this application;

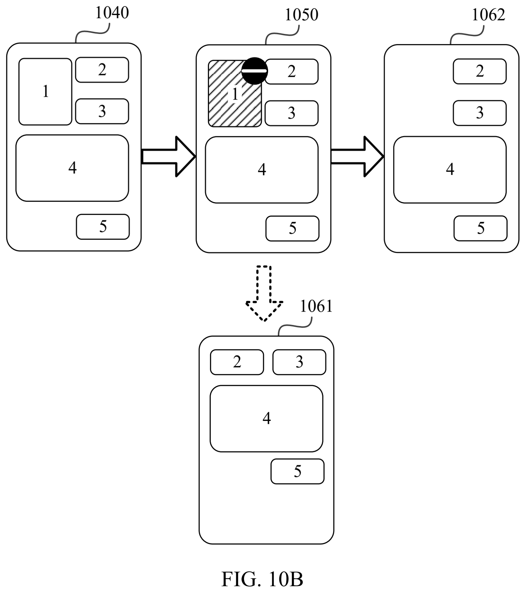

FIG. 10B is a diagram 6 of adjusting an editing layout of a control panel according to an embodiment of this application;

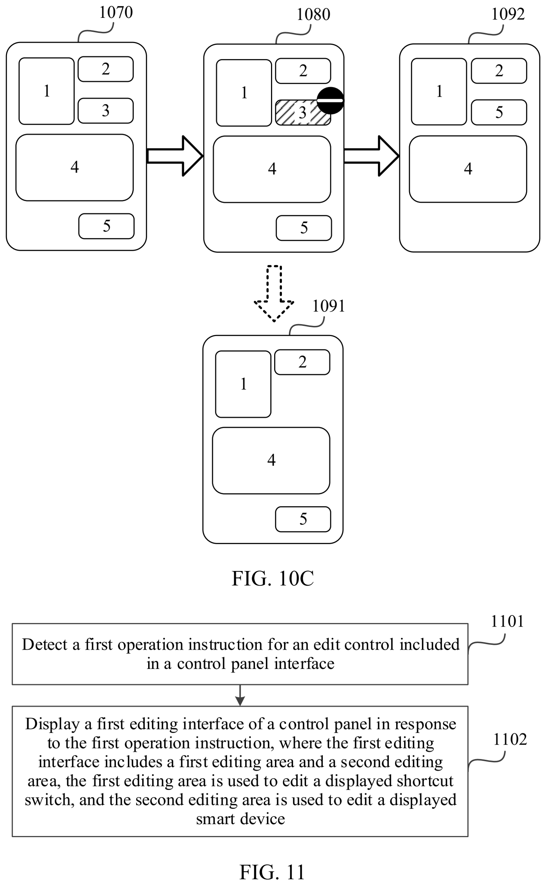

FIG. 10C is a diagram 7 of adjusting an editing layout of a control panel according to an embodiment of this application;
FIG. 11 is a schematic flowchart of a method for editing in a control panel according to an embodiment of this application;

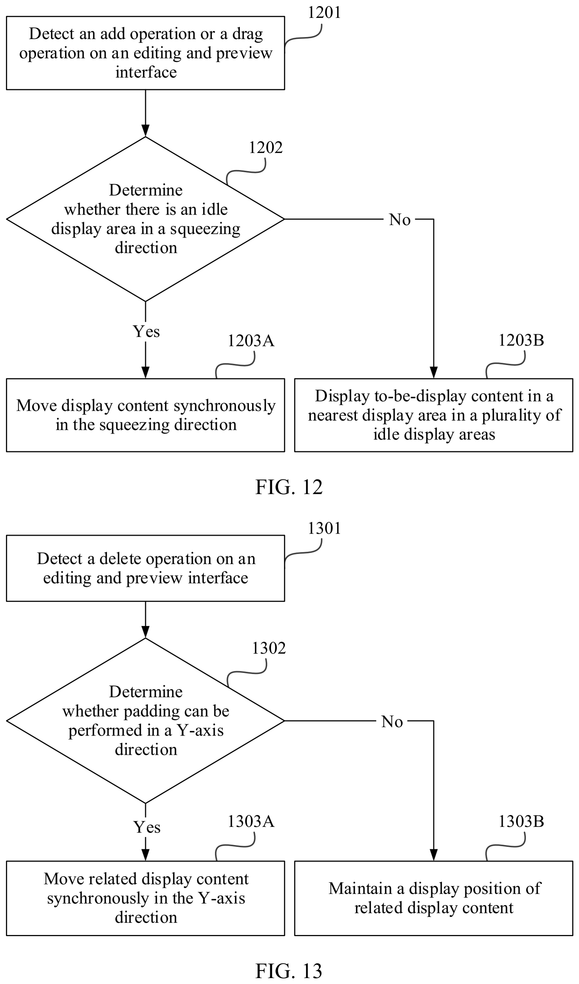

FIG. 12 is a schematic flowchart of an editing rule according to an embodiment of this application; and
FIG. 13 is another schematic flowchart of an editing rule according to an embodiment of this application.

### DESCRIPTION OF EMBODIMENTS

The following describes in detail embodiments of this application with reference to accompanying drawings.

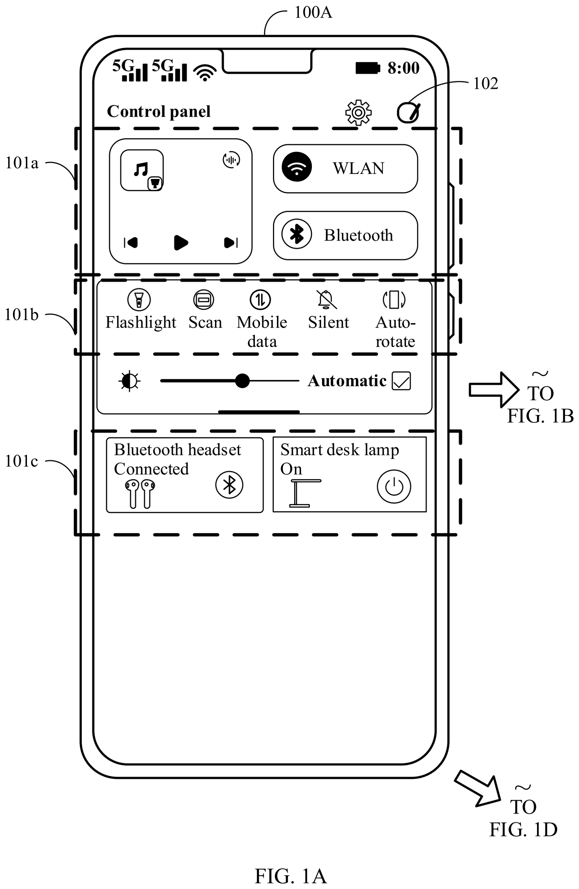

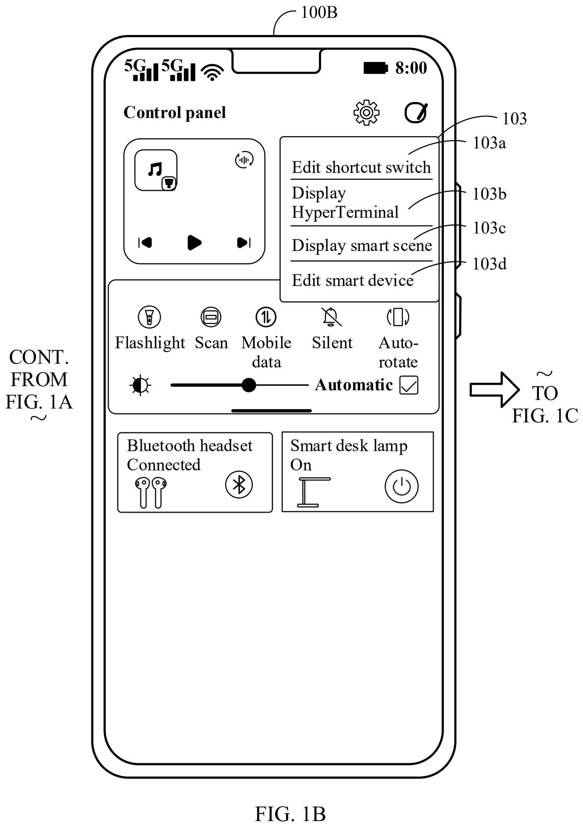

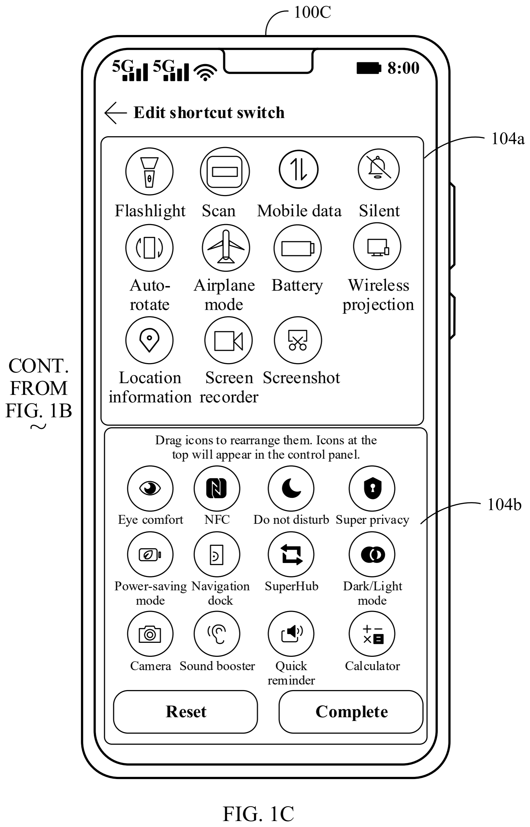

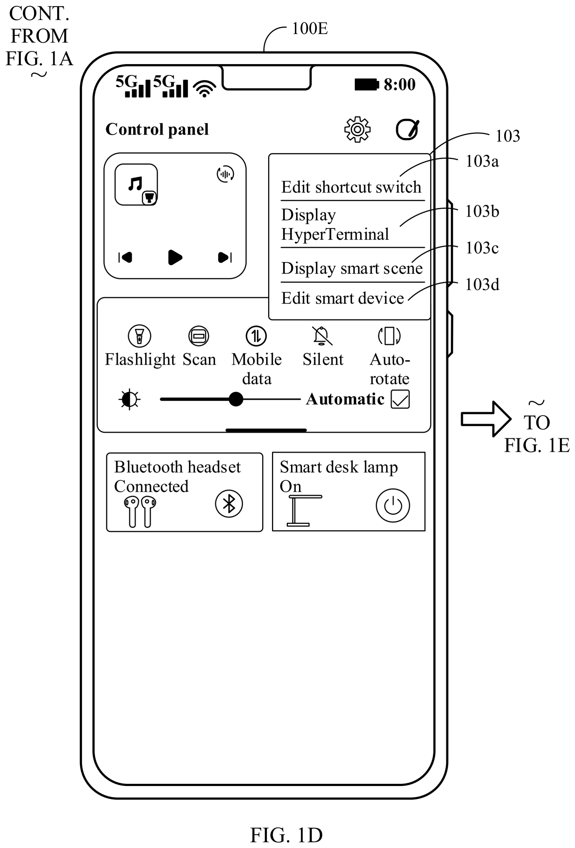

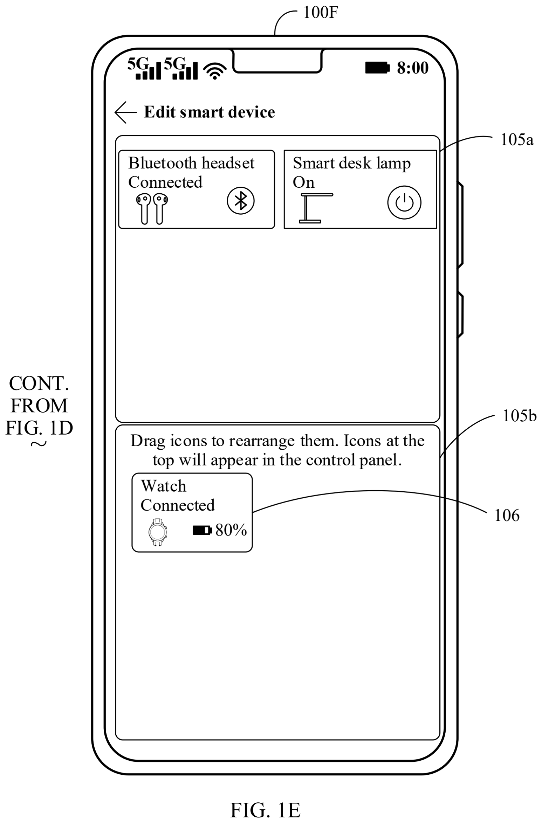

Embodiments of this application may be applied to the field of terminal technologies, and may be specifically applied to an electronic device including a control panel. In a possible scenario, FIG. 1A to FIG. 1E are a diagram of an interface of a control panel. As shown in an interface 100A in FIG. 1A to FIG. 1E, a control panel may include several areas, for example, an area 101a, which may include a plurality of fixed and uneditable widgets, for example, may include a widget used to display and manage a media broadcast function, a widget used to display and manage "WLAN", and a widget used to display and manage "Bluetooth"; an area 101b, which may include a plurality of shortcut switches, for example, a shortcut switch of "Flashlight", a shortcut switch of "Scan", a shortcut switch of "Mobile data", a shortcut switch of "Silent", a shortcut switch of "Auto-rotate", and the like; an area 101c, which may include a component of a smart device that has been connected to the electronic device; and an edit control 102.

The electronic device may display an interface 100B or an interface 100E in response to a user operation on the edit control 102. The interface 100B or the interface 100E may include a pop-up window 103. The pop-up window 103 may include an "edit shortcut switch" control 103a, a "display HyperTerminal" control 103b, a "display smart scene" control 103c, and an "edit smart device" control 103d.

Optionally, in the interface 100B, the electronic device may jump to a display interface 100C in response to an operation on the "edit shortcut switch" control 103a. The interface 100C is a level-2 interface in which a shortcut switch is edited, and the level-2 interface may include at least a display area 104a and a display area 104b. The display area 104a includes a shortcut switch that can be displayed in the interface 100A. The display area 104b includes a shortcut switch that is not displayed in the interface 100A but that can be provided by the electronic device (in this embodiment of this application, the display area 104b may also be referred to as a "candidate library", and the shortcut switch included in the display area 104b may also be referred to as a "candidate shortcut switch"). It should be understood that the shortcut switch in the display area 104b may be moved to the display area 104a or replace one shortcut switch in the display area 104a through a drag operation or the like; the shortcut switch in the display area 104a may also be moved to the display area 104b through a drag operation or the like; and a display sequence of shortcut switches in the display area 104a may also be changed through a drag operation.

In another optional manner, in the interface 100E, the electronic device may jump to a display interface 100F in response to an operation on the "edit smart device" control 103d. The interface 100F is a level-2 interface in which a smart device is edited, and the level-2 interface may include at least a display area 105a and a display area 105b. The display area 105b may be used to display a smart device that is not displayed in the interface 100A but that can be provided by the electronic device, as shown in the interface 100F. The electronic device may further provide a smart device 106 of a watch (in this embodiment of this application, the display area 105b may also be referred to as a "candidate library", and a smart device included in the display area 105b may also be referred to as a "candidate smart device"). Optionally, a source of the candidate smart device included in the candidate library may be a synchronized device on different devices with a same user account. The candidate smart device is displayed by default in a control panel on a device 2, and may be used as a candidate smart device on a device 1. When a user also adds the candidate smart device to a control panel of the device 1, the candidate smart device may also be displayed in a control panel interface of the device 1. The display area 105a may be used to display a smart device that has been displayed in the interface 100A. The smart device that has been displayed in the interface 100A may also be understood as a smart device that is added to the control panel. It should be understood that the smart device in the display area 105b may be moved to the display area 105a through a drag operation or the like; the smart device in the display area 105a may also be moved to the display area 105b through a drag operation or the like; and a display sequence of smart devices in the display area 105a may also be changed through a drag operation.

It can be learned from the scenario described in FIG. 1A to FIG. 1E that, as functions included in the control panel are increasingly enriched, there is increasingly more content that can be displayed, and a personalized edit operation performed by the user on the control panel is complex, resulting in poor user experience.

In view of this, an embodiment of this application provides a method for editing in a control panel. The method can support in implementing overall editing for a plurality of areas in an interface of a display control panel, and can implement editing and preview for a control panel obtained through editing. In addition, in an editing and preview interface, not only lightweight editing, for example, deletion and changing of a display position can be implemented, but also convenient switching for editing between different areas can be implemented, with no need to return and switch to another area. Therefore, the method can reduce complexity for editing in the control panel by a user, can improve editing flexibility and convenience, and can allow the user to more intuitively view a complete editing and preview interface of the control panel.

Embodiments of this application may be applied to an electronic device that displays a control panel, for example, a mobile phone, a PC, a tablet computer, a wearable device (for example, a watch or a band), a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or a smart home device (for example, a smart television or a smart speaker). It may be understood that a specific type of the electronic device is not limited in embodiments of this application.

An example embodiment of the electronic device to which embodiments of this application may be applied includes but is not limited to an electronic device using HarmonyOS^{®}, IOS^{®}, Android^{®}, Microsoft^{®}, or another operating system. Alternatively, the portable electronic device may be another portable electronic device, for example, a laptop (laptop) computer with a touch-sensitive surface (for example, a touch panel).

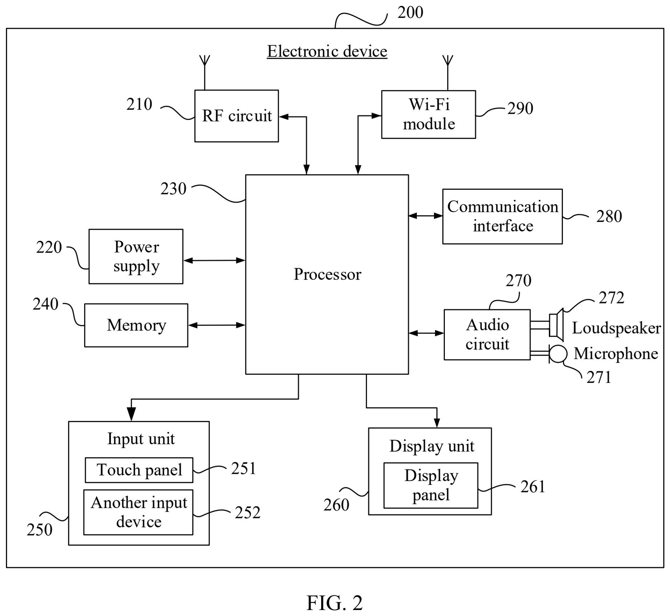

FIG. 2 is a diagram of a possible hardware structure of an electronic device. An electronic device 200 includes components such as a radio frequency (radio frequency, RF) circuit 210, a power supply 220, a processor 230, a memory 240, an input unit 250, a display unit 260, an audio circuit 270, a communication interface 280, and a wireless-fidelity (wireless-fidelity, Wi-Fi) module 290. A person skilled in the art may understand that the hardware structure of the electronic device 200 shown in FIG. 2 does not constitute a limitation on the electronic device 200. The electronic device 200 provided in embodiments of this application may include more or fewer components than those shown in the figure, or a combination of two or more components, or a different component layout. Various components shown in FIG. 2 may be implemented in hardware including one or more signal processing and/or application-specific integrated circuits, software, or a combination of hardware and software.

The following specifically describes each component of the electronic device 200 with reference to FIG. 2.

The RF circuit 210 may be configured to: receive and send data in a communication or call process. Specifically, after receiving downlink data from a base station, the RF circuit 210 sends the downlink data to the processor 230 for processing, and sends to-be-sent uplink data to the base station. Generally, the RF circuit 210 includes but is not limited to an antenna, at least one amplifier, a transceiver, a coupler, a low noise amplifier (low noise amplifier, LNA), and a duplexer.

In addition, the RF circuit 210 may communicate with another device over a wireless communication network. The foregoing wireless communication may use any communication standard or protocol, including but not limited to a global system for mobile communications (global system of mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short messaging service (short messaging service, SMS), and the like.

The electronic device 200 can further implement a communication service and interact with another electronic device. Therefore, the electronic device 200 needs to have a data transmission function. That is, the electronic device 200 needs to include a communication module. Although FIG. 2 shows communication modules such as the RF circuit 210, the Wi-Fi module 290, and the communication interface 280, it may be understood that the electronic device 200 includes at least one of the foregoing components or another communication module (for example, a Bluetooth module) configured to implement communication, to transmit data.

For example, when the electronic device 200 is a mobile phone, the electronic device 200 may include the RF circuit 210, and may further include the Wi-Fi module 290, or may include a Bluetooth module (not shown in FIG. 2). When the electronic device 200 is a computer, the electronic device 200 may include the communication interface 280, and may further include the Wi-Fi module 290, or may include a Bluetooth module (not shown in FIG. 2). When the electronic device 200 is a tablet computer, the electronic device 200 may include the Wi-Fi module, or may include a Bluetooth module (not shown in FIG. 2).

A Wi-Fi technology belongs to a short-range wireless transmission technology. The electronic device 200 may be connected to an access point (access point, AP) via the Wi-Fi module 290, to implement access to a data network. The Wi-Fi module 290 may be configured to: receive and send data in a communication process.

The electronic device 200 may be physically connected to another device through the communication interface 280. Optionally, the communication interface 280 is connected to a communication interface of the another device through a cable, to implement data transmission between the electronic device 200 and the another device.

The memory 240 may be configured to store a software program and a module. The processor 230 runs the software program and the module stored in the memory 240, to perform various function applications of the electronic device 200 and process data. Optionally, the memory 240 may mainly include a program storage area and a data storage area. The program storage area may store an operating system (mainly including software programs or modules respectively corresponding to a kernel layer, a system layer, an application framework layer, an application layer, and the like).

In addition, the memory 240 may include a high-speed random access memory, and may further include a nonvolatile memory, for example, at least one magnetic disk storage device, a flash memory device, or another volatile solid-state storage device. In embodiments of this application, the memory 240 may store computer program instructions used to implement the method for editing in the control panel provided in embodiments of this application, for example, store computer program instructions that support a function of displaying a complete editing and preview interface of the control panel on a display interface of the control panel.

The input unit 250 may be configured to: receive edit operations of a plurality of different types of data objects such as digit or character information input by a user, and generate a button signal input related to a user setting and function control of the electronic device 200. Optionally, the input unit 250 may include a touch panel 251 and another input device 252. The touch panel 251, also referred to as a touchscreen, may collect a touch operation performed by the user on or near the touch panel (for example, an operation performed by the user on the touch panel 251 or near the touch panel 251 via any proper object or accessory such as a finger or a stylus), and drive a corresponding connection apparatus based on a preset program. In embodiments of this application, the touch panel 251 may collect a user operation performed by the user on the complete editing and preview interface of the control panel, for example, an edit operation performed by the user on a shortcut switch area or a smart device area in the editing and preview interface. For another example, a half-screen interface associated with the shortcut switch area or the smart device area is displayed. The half-screen interface may include a shortcut switch or a smart device that is not displayed in the control panel, that is, a shortcut switch or a smart device included in a candidate library may be displayed.

Optionally, the another input device 252 may include but is not limited to one or more of a physical keyboard, a function button (for example, a volume control button or a power on/off button), a tracking ball, a mouse, a joystick, and the like. For example, when the electronic device 200 is a notebook computer, the another input device 252 may be a mouse and/or a keyboard.

The display unit 260 may be used to display information input by the user, information provided for the user, and various menus of the electronic device 200. The display unit 260 is a display system of the electronic device 200, and is used to present an interface to implement human-computer interaction. The display unit 260 may include a display panel 261. Optionally, the display panel 261 may be configured in a form such as a liquid crystal display (liquid crystal display, LCD) or an organic light-emitting diode (organic light-emitting diode, OLED). In embodiments of this application, the display unit 260 may be configured to display the complete editing and preview interface of the control panel for the user. For example, the editing and preview interface may include a preview interface or an editing and preview interface of a widget, an editing and preview interface of a shortcut switch area, an editing and preview interface of a smart device, an editing and preview interface of HyperTerminal, and the like. For another example, the editing and preview interface may further include a half-screen interface associated with the shortcut switch area, or a half-screen interface associated with the smart device area.

The processor 230 is a center for controlling the electronic device 200, connects to the components through various interfaces and lines, and runs or executes the software program and/or the module stored in the memory 240 and invokes the data stored in the memory 240, to perform various functions of the electronic device 200 and process the data, so as to implement a plurality of services based on the electronic device 200. In embodiments of this application, the processor 230 may be used to implement the method for editing in the control panel provided in embodiments of this application.

The electronic device 200 further includes the power supply 220 (such as a battery) configured to supply power to the components. Optionally, the power supply 220 may be logically connected to the processor 230 via a power management system, to implement functions such as charge management, discharge management, and power consumption management via the power management system.

As shown in FIG. 2, the electronic device 200 further includes the audio circuit 270, a microphone 271, and a loudspeaker 272, and may provide an audio interface between the user and the electronic device 200. The audio circuit 270 may be configured to: convert audio data into a signal that can be identified by the loudspeaker 272, and transmit the signal to the loudspeaker 272. The loudspeaker 272 converts the signal into a sound signal for output. The microphone 271 is configured to: collect an external sound signal (for example, a sound of person speaking, or another sound), convert the collected external sound signal into a signal that can be identified by the audio circuit 270, and send the signal to the audio circuit 270. The audio circuit 270 may be further configured to: convert the signal sent by the microphone 271 into audio data, and then output the audio data to the RF circuit 210 for sending to, for example, another electronic device, or output the audio data to the memory 240 for subsequent processing.

Although not shown, the electronic device 200 may further include a camera, at least one sensor, and the like. Details are not described herein again. The at least one sensor may include but is not limited to a pressure sensor, a barometric pressure sensor, an acceleration sensor, a distance sensor, a fingerprint sensor, a touch sensor, a temperature sensor, and the like.

An operating system (operating system, OS) in embodiments of this application is the most basic system software running on the electronic device 200. A software system of the electronic device 200 may use a layered architecture, an event-driven architecture, a microkernel architecture, a micro service architecture, or a cloud architecture. In embodiments of this application, an operating system using a layered architecture is used as an example to describe a software system architecture of the electronic device 200.

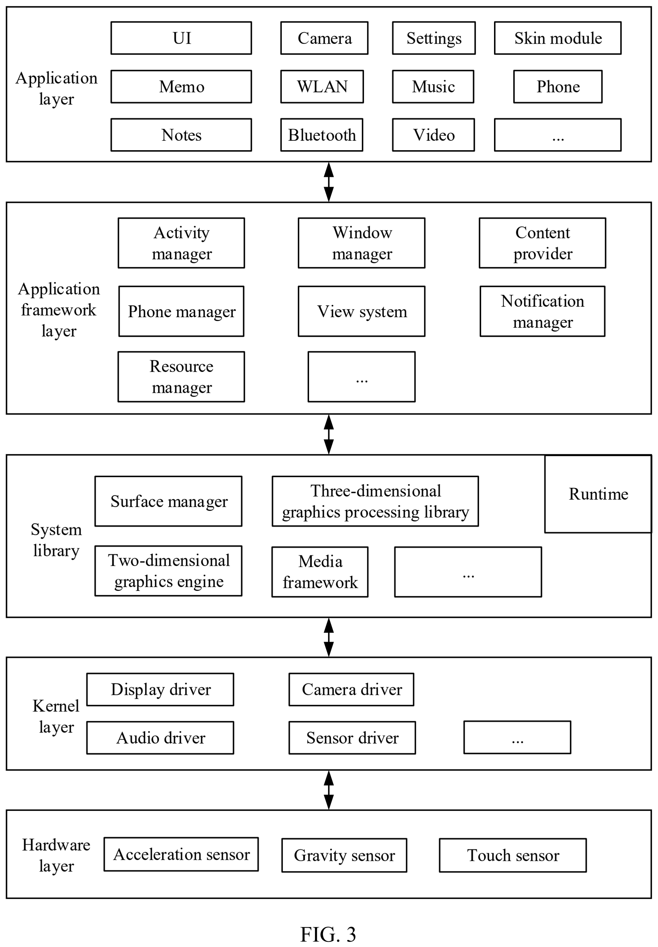

FIG. 3 is a block diagram of a software system architecture of an electronic device according to an embodiment of this application. As shown in FIG. 3, the software system architecture of the electronic device may be a layered architecture. For example, software may be divided into several layers, and each layer has a clear role and task. The layers communicate with each other through a software interface. In some embodiments, an operating system is divided into five layers: an application layer, an application framework (framework, FWK) layer, a runtime and system library, a kernel layer, and a hardware layer from top to bottom.

The application layer may include a series of application packages. As shown in FIG. 3, the application layer may include Camera, Settings, Skin module, a user interface (user interface, UI), a third-party application, and the like. The third-party application may include a wireless local area network (wireless local area network, WLAN), Music, Phone, Bluetooth, Video, Memo, Notes, and the like.

In embodiments of this application, the application layer may be configured to present an editing and preview interface. Various editing in the control panel may be implemented on the foregoing editing and preview interface based on the method for editing in the control panel in the following embodiments.

In a possible implementation, an application may be developed by using a Java language, and is completed by invoking an application programming interface (application programming interface, API) provided by the application framework layer. A developer may interact with a bottom layer (for example, the hardware layer and the kernel layer) of the operating system through the application framework layer, to develop an application of the developer. The application framework layer mainly includes a series of services and management systems of the operating system.

The application framework layer provides an application programming interface and a programming framework for an application at the application layer. The application framework layer includes some predefined functions. As shown in FIG. 3, the application framework layer may include an activity manager, a window manager, a content provider, a view system, a phone manager, a resource manager, a notification manager, and the like.

The activity manager is configured to: manage a life cycle of each application, provide a common navigation rollback function, and provide an interaction interface for windows of all programs.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

A runtime includes a core library and a virtual machine. The runtime schedules and manages an operating system.

The kernel library includes two parts: a function that needs to be invoked in Java language, and a kernel library of the operating system. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media framework (media framework), a three-dimensional graphics processing library (for example, OpenGL ES), and a two-dimensional graphics engine (for example, SGL).

The surface manager is configured to manage a display subsystem and provide fusion of two-dimensional and 3D layers for a plurality of applications.

The media framework supports playback and recording of audios and videos in a plurality of commonly used formats, static image files, and the like. The media framework may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

In some embodiments, the three-dimensional graphics processing library may be configured to draw a three-dimensional motion trajectory image, and the two-dimensional graphics engine may be configured to draw a two-dimensional motion trajectory image.

The kernel layer is a layer between hardware and software. The kernel layer includes at least a display driver, a camera driver, an audio driver, and a sensor driver.

The hardware layer may include various sensors such as an acceleration sensor, a gravity sensor, and a touch sensor.

Generally, the electronic device 200 may run a plurality of applications at the same time. In a simple case, one application may correspond to one process, and in a complex case, one application may correspond to a plurality of processes. Each process has a process number (process ID).

It should be understood that "at least one of the following items (pieces)" or a similar expression thereof in embodiments of this application indicates any combination of these items, and includes a singular item (piece) or any combination of plural items (pieces). For example, at least one of a, b, or c may represent: a, b, c, a and b, a and c, b and c, or a, b and c, where a, b, and c may be a singular or plural number. "Multiple" refers to two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

In addition, it should be understood that in description of this application, terms such as "first" and "second" are merely used for distinguishing and description, but should not be understood as indicating or implying relative importance, or should not be understood as indicating or implying a sequence.

It should be understood that the hardware structure of the electronic device may be shown in FIG. 2, and the software system architecture may be shown in FIG. 3. A software program and/or a module corresponding to the software system architecture of the electronic device may be stored in the memory 240. The processor 230 may run the software program and an application that are stored in the memory 240, to perform a procedure of the method for editing in the control panel provided in embodiments of this application.

To facilitate understanding of the method for editing in the control panel provided in this application, the following describes, with reference to content shown in FIG. 4A-1 to FIG. 4A-6 to FIG. 10C, an implementation process of the method provided in this application.

The method provided in embodiments of this application may be applied to an electronic device like a mobile phone or a tablet computer, and may be specifically applied to a scenario in which a control panel is displayed in the electronic device. On the electronic device, the control panel may be generally triggered through a pull-up operation, a pull-down operation, or the like for display. In embodiments of this application, an example in which the electronic device 200 is a mobile phone is used. The following first describes, by using a plurality of possible scenarios, interface processing effect that can be implemented by using the method provided in embodiments of this application. It may be understood that during specific implementation, this application is not limited to the following described scenarios.

Scenario A1: FIG. 4A-1 to FIG. 4A-6 are a diagram of an editing interface of a control panel according to an embodiment of this application. With reference to the interface 100A shown in FIG. 1A to FIG. 1E, the electronic device may display an interface 400A in response to an operation on the edit control 102 included in the interface 100A. The interface 400A is an editing and preview interface when the control panel is in an editing state. The interface 400A may include but is not limited to the following parts.
(1) An area 401 may include a plurality of fixed and uneditable widgets, for example, may include a widget used to display and manage a media broadcast function, a widget used to display and manage "WLAN", and a widget used to display and manage "Bluetooth". For the area 401 shown in the interface 400A, refer to the area 101a in the interface 100A.

In another possible scenario, because the area 401 includes the fixed and uneditable widget, the area 401 may not be displayed in the editing and preview interface of the control panel, as shown in an interface 400B, to simplify the editing and preview interface. For example, a user may perform customization through setting, or a system displays the area 401 by default or does not display the area 401 by default. This is not limited in this application. Alternatively, the fixed and uneditable widget may not be included in the following scenario. Details are not described in the following embodiments.

(2) The area 402 may be used to edit a shortcut switch that can be displayed in the control panel. The shortcut switch included in the area 402 may be a shortcut switch that can be displayed in the control panel. Optionally, the shortcut switch that can be displayed may be directly displayed, for example, several shortcut switches shown in the interface 100A. In another optional manner, the shortcut switch that can be displayed may be alternatively displayed through an operation. For example, the electronic device may display an interface 410 in response to a sliding-down operation performed by the user on an area that is in the interface 100A and that is used to display the shortcut switch, and more shortcut switches may be displayed in the interface 410.

As shown in the interface 400A in FIG. 4A-1 to FIG. 4A-6, each shortcut switch included in the area 402 may display a corresponding delete control. For example, a shortcut switch of wireless projection in the interface 400A corresponds to a delete control 402a. For example, the electronic device may place the shortcut switch of wireless projection back into a candidate library of the shortcut switch in response to an operation on the delete control 402a, and may display an interface 420. Compared with that in the interface 400A, in the interface 420, the area 402 does not include the shortcut switch of wireless projection. It should be noted that a form and a position of the delete control are not limited in embodiments of this application. For example, the delete control may be alternatively in a form of "×".

As shown in the interface 400A in FIG. 4A-1 to FIG. 4A-6, the area 402 may further include an "add shortcut switch" control 402b. For example, the electronic device may display an interface 430 in the interface 400A in a half-screen form in response to an operation on the control 402b. The interface 430 includes one or more candidate shortcut switches. Optionally, one candidate shortcut switch may be displayed in the control panel through an operation of dragging the candidate shortcut switch to the area 402. In another optional manner, the candidate shortcut switch may further include an add control, and the candidate shortcut switch may also be displayed in the control panel through a tap operation on the add control. In still another optional manner, the candidate shortcut switch may be displayed in the control panel through a double-tap operation on the candidate shortcut switch. A manner of adding the shortcut switch is not limited in this application.

In addition, in the area 402, a display sequence of shortcut switches may be changed through a drag operation or the like. Details are not described in this application.

(3) The area 403 may be used to edit a smart device that can be displayed in the control panel. The smart device included in the area 403 may be a device that has been added to the control panel of the electronic device.

As shown in the interface 400A in FIG. 4A-1 to FIG. 4A-6, each smart device included in the area 403 may display a corresponding delete control. For example, a smart device of a smart desk lamp in the interface 400A displays a corresponding delete control 403a. For example, the electronic device may place the smart device of the smart desk lamp back into a candidate library in response to an operation on the delete control 403a. It may also be understood as that the smart desk lamp is no longer displayed in the control panel. For a specific implementation process, refer to processing in the area 402. Details are not described herein again.

As shown in the interface 400A in FIG. 4A-1 to FIG. 4A-6, the area 403 may further include an "add smart device" control 403b. In response to an operation on the control 403b, the electronic device may display, in the interface 400A in a half-screen form, an interface including the candidate library of the smart device, which is not shown in FIG. 4A-1 to FIG. 4A-6. In this way, the area 403 may be edited in the interface including the candidate library of the smart device, for example, a smart device is added. For a specific implementation process, refer to processing in the area 402. Details are not described herein again.

(4) The control 404 may be configured to determine an editing result. It should be understood that during actual implementation, a display position and a display manner of the control 404 are not limited in this application.

For example, in response to an operation on the control 404 included in the interface 420, the electronic device may display, based on a preview result displayed in the interface 420 in an editing state, a control panel obtained after the editing state is exited and through editing.

In a possible scenario, as shown in FIG. 4B-1 to FIG. 4B-3, the electronic device may display an interface 440 in response to an operation of dragging "Eye comfort" in the interface 430 to the area 402. Compared with that in the interface 400A, in the interface 440, the shortcut switch of "Eye comfort" is added to the area 402. Optionally, in response to the drag operation, the electronic device may collapse the interface 430 by default as shown in FIG. 4B-1 to FIG. 4B-3, or may adjust the interface 430 to a smaller size, or may maintain the display interface 430. This is not limited in this application. It should be noted that a specific implementation of adding the shortcut switch to the control panel is not limited in this application. For example, the shortcut switch may be added through the drag operation shown in FIG. 4B-1 to FIG. 4B-3, or may be added through a tap operation, or may be added via an add control corresponding to each shortcut switch.

In the interface 440, in response to the operation on the control 404, the electronic device may display an interface 450 based on a preview result displayed in the interface 440 in an editing state. The interface 450 is used to display a control panel obtained after the editing state is exited. Compared with that in the interface 410 in FIG. 4A-1 to FIG. 4A-6, in the interface 450 in FIG. 4B-1 to FIG. 4B-3, the shortcut switch of "Eye comfort" is added to the display area of the shortcut switch.

In another possible scenario, in an interface 460 in FIG. 4C-1 to FIG. 4C-3, the electronic device may display an interface 470 in response to an operation of dragging "Mobile data" before "Flashlight". Compared with those in the interface 460, in the interface 470, positions of "Flashlight" and "Scan" are refreshed due to a position change of "Mobile data".

In the interface 470, in response to the operation on the control 404, the electronic device may display an interface 480 based on a preview result displayed in the interface 470 in an editing state. The interface 480 is used to display a control panel obtained after the editing state is exited.

(5) The control 405 may be configured to exit the editing state and return to the original control panel before editing. It should be understood that the control 405 may indicate that the user does not confirm the editing result. It should be understood that during actual implementation, a display position and a display manner of the control 405 are not limited in this application.

Compared with that in the editing manner of the control panel in FIG. 1A to FIG. 1E, the content described in the scenario A1 can implement overall editing in the control panel, allow the user to intuitively view the editing and preview interface of the control panel, can reduce operation complexity of the user, and improve editing flexibility.

Scenario A2: FIG. 5A to FIG. 5D are a diagram of another editing interface of a control panel according to an embodiment of this application. For example, the electronic device displays an interface 500 in response to an operation on the edit control 102 included in the interface 100A. The interface 500 is an editing and preview interface when the control panel is in an editing state. Different from the area 401 included in the interface 400A included in FIG. 4A-1 to FIG. 4A-6, an area 501 included in the interface 500 may further include an "add widget" control 501a.

Optionally, the electronic device may display an interface 510 in the interface 500 in a half-screen form in response to an operation on the control 501a in the interface 500. The interface 510 includes one or more candidate widgets. The candidate widget is a widget that is not displayed in the area 501 but that can be provided by the electronic device, for example, may include a "HyperTerminal" widget and a "Do not disturb" widget. In a possible scenario, the electronic device may display the candidate widget in the control panel in response to a tap operation on the "HyperTerminal" widget. In another possible scenario, the electronic device may also display the candidate widget in the control panel in response to an operation of dragging the "HyperTerminal" widget to the area 501. In still another possible scenario, the electronic device may further display the candidate widget in the control panel in response to a tap operation on an add control 502 corresponding to the "HyperTerminal" widget. A specific addition manner is not limited in this application.

In addition, after the interface 510 is displayed, the interface 500 may no longer display the "add widget".

For example, the electronic device displays an interface 520 in response to the tap operation or the drag operation. Compared with the area 501 in the interface 500, an area 501 in the interface 520 may further include the "HyperTerminal" widget. In addition, a part of widgets included in the area 501 may also display a corresponding delete control, for example, a delete control 503 corresponding to the "HyperTerminal" widget in the interface 520. It should be understood that, in response to an operation on the delete control 503, the electronic device may further place the "HyperTerminal" widget back into a candidate library. Optionally, an area of a media broadcast function, an area of WLAN, and an area of Bluetooth that are included in the area 501 may still be fixed and uneditable areas. In other words, a widget added to the area 501 from the candidate library is editable. In another optional manner, each widget included in the area 501 is editable. It may also be understood as that a user may customize a widget area.

According to the content described in the scenario A2, compared with that in the scenario A1, the widget area included in the control panel may also be edited. This can meet user editing requirements in more scenarios.

Scenario A3: FIG. 6A-1 to FIG. 6A-4 are a diagram of another editing interface of a control panel according to an embodiment of this application. For example, the electronic device may further display an interface 600 or an interface 620 in response to an operation on the edit control 102 included in the interface 100A. The interface 600 and the interface 620 are two different editing and preview interfaces when the control panel is in an editing state. Different from the interface 500 included in FIG. 5A to FIG. 5D, the interface 600 may display a half-screen interface 610 by default, and the interface 620 may display a half-screen interface 630 by default. The half-screen interface 610 is used to display a candidate library of a widget, and the half-screen interface 630 is used to display a candidate library of a shortcut switch. This can implement more intuitive editing in the control panel by a user by displaying the candidate library in a default area. It should be understood that the default area may be an initial area of the control panel, for example, an area 601 shown in the interface 600; or the default area may be a specified area of the control panel, for example, an area 602 shown in the interface 620. In addition, as shown in the interface 600 and the interface 620, when the candidate library is displayed in the interface, an area associated with the candidate library may further have preset display effect. The preset display effect may be, for example, a bold border or a highlighted border. This is not limited in this application.

Optionally, based on default display in the half-screen interface, each area may no longer include an add control used to add a candidate widget, a candidate shortcut switch, or a candidate smart device that is included in the candidate library, for example, no longer includes an "add widget" control, an "add shortcut switch" control, and an "add smart device" control.

In a possible scenario, in the interface 600, the electronic device may display the interface 620 in response to a tap operation on the area 602. It may also be understood as that the electronic device may switch from displaying the half-screen interface 610 to displaying the half-screen interface 630 in response to an operation, that is, switch from the candidate library associated with the display area 601 to the candidate library associated with the display area 602. It should be understood that the electronic device may alternatively switch and display a candidate library associated with another area in response to an operation. A specific implementation process is not described again.

In another possible scenario, in the interface 620, the electronic device may further display an interface 640 in response to a pull-down operation on the area 630. Compared with the half-screen interface 630 displayed in the interface 620, a half-screen interface 650 displayed in the interface 640 has a smaller size. This can reduce blocking by the half-screen interface on the editing and preview interface of the control panel, display more editing and preview interfaces, and meet requirements in more editing scenarios.

Scenario A4: FIG. 6B-1 to FIG. 6B-4 are a diagram of another editing interface of a control panel according to an embodiment of this application. For an interface 600 included in FIG. 6B-1 to FIG. 6B-4, refer to the description content of FIG. 6B-1 to FIG. 6B-4 are. In the interface 600, the electronic device may further display an interface 660 in response to a scroll operation on an editing and preview area. The scroll operation may indicate a user to switch and view display content in the editing and preview area. Therefore, compared with a half-screen interface 610 displayed in the interface 600, a half-screen interface 670 displayed in the interface 660 has a smaller size. In addition, compared with that in the interface 600, content that is displayed in the interface 660 and that is in the editing and preview area moves upward. It should be understood that a moving range of the editing and preview area may be determined through the scroll operation.

In the interface 660, the electronic device may further continue to switch and display an interface 680 in response to the scroll operation on the editing and preview area. Compared with that in the interface 660, content that is displayed in the interface 680 and that is in the editing and preview area moves upward. In addition, as shown in the interface 680, due to content movement, an area 601 is no longer displayed in the interface 680. In this case, the electronic device detects and responds to the display event, and may switch from displaying the half-screen interface 670 to displaying a half-screen interface 690. The half-screen interface 690 is a candidate library corresponding to an area 602. In this way, the candidate library and an editing and preview interface can be displayed in association.

In the interface 680, the electronic device may further continue to display an interface 6010 in response to the scroll operation on the editing and preview area. Compared with that in the interface 680, content that is displayed in the interface 6010 and that is in the editing and preview area moves upward. Similar to the interface 680, as shown in the interface 6010, due to content movement, the area 602 is no longer displayed in the interface 6010, and an area 603 is displayed at an initial display position. In this case, the electronic device detects and responds to the display event, and may switch from displaying the half-screen interface 690 to displaying a half-screen interface 6020. The half-screen interface 6020 is a candidate library corresponding to the area 603. In this way, the candidate library and an editing and preview interface can be displayed in association.

According to an implementation process of the scenario A4, in a process of editing in the control panel, the user can switch and edit different areas more flexibly, and as the user browses the editing and preview interface, different candidate libraries can be automatically switched and displayed. This can reduce manual switch operations of the user, and improve editing efficiency of the user.

In addition, based on the foregoing descriptions of the scenario A1 to the scenario A4, it is considered that a complete editing and preview interface that includes a plurality of areas in the control panel may be displayed, and a display sequence of the plurality of areas included in the control panel may also be changed. For example, in response to an operation of dragging the display area of the widget to the display area of the shortcut switch, the electronic device may display the display area of the shortcut switch at an initial area position of the control panel, and display the display area of the widget at a second area position of the control panel.

Scenario B: FIG. 7A to FIG. 7D are a diagram of another editing interface of a control panel according to an embodiment of this application. For example, the electronic device displays an interface 700 in response to an operation on the edit control 102 included in the interface 100A. The interface 700 is an editing and preview interface when the control panel is in an editing state, and the interface 700 displays a half-screen interface 710. Different from the half-screen interface 510 displayed in the interface 500 in FIG. 5A to FIG. 5D, the interface 710 may further include a combined widget 711 and a combined widget 712. The combined widget 711 may be obtained by combining "Eye comfort", "Dark/Light mode", and "Brightness", and the combined widget 712 may be obtained by combining "Scan", "Payment code", and "Mobile top up". Optionally, the combined widget may be obtained by the electronic device through clustering based on a same or similar function. For example, the combined widget 711 includes a plurality of components having a display function, and the widget 712 includes a plurality of components having a transaction function. In another optional manner, the combined widget may be alternatively obtained by the electronic device according to another preset rule, for example, according to a use frequency of a user. In still another optional manner, the combined widget may be alternatively implemented in response to an operation of the user. For example, when the user drags a component above another component in a half-screen interface or an editing and preview interface, automatic generation of a combined widget may be triggered. In still another optional manner, the combined widget may be provided by a third party. A source of the combined widget is not limited in this application.

Optionally, in the interface 710, the electronic device displays an interface 720 in response to an operation on the combined widget 711. The operation may be, for example, a tap operation or a drag operation. This is not limited in this application. Compared with that in the interface 700, in the interface 720, the combined widget 711 is added to the editing and preview interface of the control panel.

In the interface 720, the electronic device displays an interface 730 in response to the operation on the control 404. The interface 730 is a control panel obtained through editing. Compared with that in the interface 100A, in the interface 730, the combined widget is added. Optionally, it is considered that the combined widget already includes a "brightness" function. Therefore, compared with the shortcut switch display area 701 shown in the interface 100A, a shortcut switch display area 702 in the interface 730 may no longer display brightness.

It should be understood that, in FIG. 7A to FIG. 7D, a widget area is used as an example, and a candidate library associated with a shortcut switch area, a candidate library associated with a smart device area, and the like may also include a combined shortcut switch, a combined smart device card, and the like. Details are not described in this application.

In addition, content of the combined widget, content of the combined shortcut switch, and content of the component smart device that are described in the scenario B may be further combined with the scenario A1 to the scenario A4. A specific scenario is not described in detail in this application.

Scenario C: Based on the description content of the scenario A1 to the scenario A4 and the scenario B, the component/the shortcut switch/the smart device in the editing and preview interface can be added, deleted, or changed. In addition, a combination of widgets, a combination of shortcut switches, a combination of smart devices, and the like may be further implemented. Based on this, how to determine an editing layout of the control panel is worth considering.

For example, FIG. 8A is a diagram of adjusting an editing layout of a control panel according to an embodiment of this application. 810 included in FIG. 8A may include three pieces of display content. 810 may be, for example, an area used by the control panel to display a widget, and the three pieces of display content may be, for example, a widget for media playing, a widget for a wireless network, and a combined widget. 810 may also be, for example, an area used by the control panel to display a shortcut switch, and the three pieces of display content may be, for example, a combined shortcut switch 1, a combined shortcut switch 2, and a combined shortcut switch 3. 810 may be, for example, an area used by the control panel to display a smart device, and the three pieces of display content may be, for example, a card of a Bluetooth headset, a card of a smart desk lamp, or a card of a watch. It should be noted that the following display content in FIG. 8B to FIG. 10C may also correspond to an editing area of the control panel. Details are not described below.

For example, the electronic device detects an operation 1 of adding display content 800A to the interface 810, as shown in an interface 820. The operation 1 indicates to insert the display content 800A above display content 3. The electronic device displays an interface 830 in response to the operation 1. As shown in the interface 830, the display content 3 moves downward in a vertical direction, and the added display content 800A is displayed between display content 2 and the display content 3.

For another example, FIG. 8B is another diagram of adjusting an editing layout of a control panel according to an embodiment of this application. 840 included in FIG. 8B may include three pieces of display content. For example, the electronic device detects an operation 2 of adding display content 800B to the interface 840, as shown in an interface 850. The operation 1 indicates to insert the display content 800B above display content 2. The electronic device displays an interface 860 in response to the operation 2. As shown in the interface 860, the display content 2 and display content 3 move downward in a vertical direction, and the added display content 800B is displayed above the display content 2.

For another example, FIG. 9A is still another diagram of adjusting an editing layout of a control panel according to an embodiment of this application. An interface 910 included in FIG. 9A may include six pieces of display content. In addition, a rule of a limited height of six rows is set in 910. For example, the electronic device detects an operation 3 of adding display content 900A to the interface 910, as shown in an interface 920. The operation 3 indicates to insert the display content 900A above display content 2. The electronic device displays an interface 930 in response to the operation 3. As shown in the interface 930, because a right column is fully occupied in a row direction, the display content 900A cannot squeeze a right column display area. In this case, the electronic device may display the display content 900A in a nearest idle display area in response to the full occupation event, as shown in the interface 930, in an idle display area between display content 1 and display content 5.

It should be understood that, when determining a display position of the display content 900A, the electronic device may further determine whether the nearest idle display area is greater than or equal to a display area required by the display content 900A. If the display content 900A cannot be displayed, the electronic device may continue to determine an idle display area at a next short distance.

In addition, it should be further understood that the display content may be in various sizes such as 1*1, 2*1, 1*2, and 2*2, and the electronic device may perform an editing layout based on the size of the display content. For example, the display content 900A shown in the interface 920 is in a size of 2*1. Therefore, the electronic device needs to determine whether the display content 900A can squeeze two right columns. For another example, when the added display content is in a size of 1*1, and an operation indicates to squeeze the rightmost column, the electronic device needs to determine whether the added display content can squeeze the rightmost column.

For another example, FIG. 9B is still another diagram of adjusting an editing layout of a control panel according to an embodiment of this application. An interface 940 included in FIG. 9B may include three pieces of display content. For example, the electronic device detects an operation 4 of adding display content 900B to the interface 940, as shown in an interface 950. The operation 4 indicates to insert the display content 900B at a position of display content 1. The electronic device displays an interface 960 in response to the operation 4. As shown in the interface 960, because an area above the display content 1 cannot be squeezed, the display content 900B cannot squeeze a display area of the display content 1. In this case, the electronic device may display the display content 900B in a nearest idle display area in response to the event that the display area cannot be squeezed. As shown in the interface 960, the display content 900B is displayed in an idle display area below the display content 1.

For another example, FIG. 10A is still another diagram of adjusting an editing layout of a control panel according to an embodiment of this application. 1010 included in FIG. 10A may include six pieces of display content in two columns. For example, the electronic device detects an operation 5 of deleting display content 1 in the interface 1010, as shown in an interface 1020. The operation 5 indicates to delete the display content 1. For example, the display content 1 may be deleted through a tap operation on a delete control. The electronic device displays an interface 1032 in response to the operation 5. As shown in the interface 1032, display content that is in a same column as the display content 1 in a vertical direction is padded upward, that is, display content 2 and display content 4 are padded upward. In another optional manner, the electronic device may further display an interface 1031 in response to the operation 5. As shown in the interface 1031, all display content included in the interface is sequentially padded. In this way, the display content is displayed in different columns, and consequently display content that has been edited by the user is greatly changed.

For another example, FIG. 10B is still another diagram of adjusting an editing layout of a control panel according to an embodiment of this application. 1040 included in FIG. 10B may include five pieces of display content. For example, the electronic device detects an operation 6 of deleting display content 1 in the interface 1040, as shown in an interface 1050. The operation 6 indicates to delete the display content 1. For example, the display content 1 may be deleted through a tap operation on a delete control. The electronic device displays an interface 1062 in response to the operation 6. As shown in the interface 1062, display content that is in a same column as the display content 1 in a vertical direction may be padded upward. However, because a size of display content 4 includes four columns, the display content 4 cannot be displayed in an area corresponding to the display content 1. Therefore, the display content 4 may remain unchanged. In another optional manner, the electronic device may further display an interface 1061 in response to the operation 6. As shown in the interface 1061, all display content included in the area is sequentially padded. In this way, the display content is displayed in different columns, and consequently display content that has been edited by the user is greatly changed.

For another example, FIG. 10C is still another diagram of adjusting an editing layout of a control panel according to an embodiment of this application. 1070 included in FIG. 10C may include five pieces of display content. For example, the electronic device detects an operation 7 of deleting display content 3 in the interface 1070, as shown in an interface 1080. The operation 7 indicates to delete display content 2. For example, the display content 2 may be deleted through a tap operation on a delete control. The electronic device displays an interface 1092 in response to the operation 7. As shown in the interface 1092, display content that is in a same column as the display content 2 in a vertical direction is padded upward. Because a size of display content 5 includes four columns, display content 4 cannot be displayed in an area corresponding to the display content 3. Therefore, the display content 4 may remain unchanged. In addition, the display content 5 may be further included in the same vertical direction as the display content 3, and can be displayed, so that the display content may be padded to the original display area of the display content 3. In another optional manner, the electronic device may further display an interface 1091 in response to the operation 7. As shown in the interface 1091, all display content included in the area is sequentially padded. In this way, the display content is displayed in different columns, and consequently display content that has been edited by the user is greatly changed.

In addition, it should be noted that the editing layout manners described in FIG. 8A to FIG. 10C are not only applicable to the editing scenario of the control panel, but also applicable to an application display interface including a plurality of columns. For example, after the electronic device marks that the electronic device is not interested in one piece of display content displayed in the application interface and the display content needs to be deleted, one or more pieces of display content below the display content and in a same column as the display content may be padded, and display content in a different column may remain unchanged. This can reduce changes to the display content in the display interface and avoid affecting viewing experience or use habits of the user.

Based on the foregoing description content of the interface processing effect that can be achieved by using the method provided in embodiments of this application, the following describes an implementation process of the method for editing in the control panel provided in this application, to describe how to use the method provided in this application to achieve the interface processing effect shown in FIG. 4A-1 to FIG. 4A-6 to FIG. 10C, so as to help improve editing flexibility and convenience of the control panel.

FIG. 11 is a schematic flowchart of a method for editing in a control panel according to a possible embodiment of this application. The method may be applied to an electronic device (for example, a mobile phone, a PC, or a tablet computer). For example, the electronic device is a mobile phone, and the following procedure may be included.

Step 1101: Detect a first operation instruction for an edit control included in a control panel interface. For example, the control panel interface is, for example, the interface 100A, the edit control is, for example, the control 102 included in the interface 100A, and the first operation instruction may be, for example, the tap operation.

Step 1102: Display a first editing interface of a control panel in response to the first operation instruction, where the first editing interface includes a first editing area and a second editing area, the first editing area is used to edit a displayed shortcut switch, and the second editing area is used to edit a displayed smart device.

Optionally, the first editing interface may further include a widget area. The first editing interface is, for example, the interface 400A. The first editing area is, for example, the area 402 in the interface 400A, the second editing area is, for example, the area 403 in the interface 400A, and a third editing area is, for example, the area 401 in the interface 400A.

In another optional manner, the first editing interface further includes the third editing area, and the third editing area is used to edit the displayed widget. The first editing interface is, for example, the interface 500, and the third editing area is, for example, the area 501 in the interface 500.

According to the method provided in this embodiment of this application, a complete editing and preview interface of the control panel may be displayed. This allow the user to more intuitively view the editing and preview interface, and further improve accuracy for editing in the control panel by a user.

It is considered that different display areas of the control panel further have corresponding candidate libraries. In this embodiment of this application, the candidate library may be triggered in a plurality of manners for display, and the manners may include but are not limited to one or a combination of the following manners.

Manner A: Trigger based on an add control. As shown in FIG. 4A-1 to FIG. 4A-6, an add control corresponding to the area 402 may be the "add shortcut switch" control 402b, and an add control corresponding to the area 403 may be the "add smart device" control 402b. As shown in FIG. 5A to FIG. 5D, an add control corresponding to the area 501 may be the "add widget" control 501a. For example, when detecting an operation instruction on any add control, the electronic device may display, in response to the operation instruction, a candidate library in a corresponding area in a half-screen interface, for example, as shown in the interface 430 in FIG. 4A-1 to FIG. 4A-6. In this manner, a control reminder manner is used, so that when the user has a requirement, the candidate library can be invoked, and when the candidate library is not required, blocking on the editing and preview interface can be reduced.

Manner B: Display by default. As shown in FIG. 6A-1 to FIG. 6A-4 are, in response to the operation instruction for the edit control 102, when displaying the editing interface of the control panel, the electronic device may synchronize the candidate library in the display area 601 by default or synchronize the candidate library in the display area 602 by default. In this way, the user can more intuitively view some candidate widgets, shortcut switches, and smart devices, to meet more personalized editing scenarios of the user.

Manner C: Switch and display with scrolling of the editing and preview interface. For specific implementation content, refer to the content described in FIG. 6A-1 to FIG. 6A-4.

Editing in the control panel can be implemented in the editing and preview interface and by using a candidate library interface displayed in a half-screen form. The editing manner may include but is not limited to at least one of the following manners.

Editing manner 1: Add content. For example, the electronic device may add content to the control panel in response to an operation instruction of the user for adding the display content to the editing and preview interface from the candidate library. For details, refer to the content described in FIG. 4B-1 to FIG. 4B-3 and FIG. 5A to FIG. 5D.

Optionally, the added content may include a single widget, shortcut switch, and smart device, and may further include widgets, shortcut switches, and smart devices in a combined form. For details, refer to the content described in FIG. 7A to FIG. 7D.

Editing manner 2: Delete content. For example, the electronic device may place, in response to an operation instruction of the user for deleting the display content in the editing and preview interface, the content displayed in the control panel back into the candidate library. For details, refer to the content described in FIG. 4A-1 to FIG. 4A-6.

In a possible scenario, when editing in the control panel is performed, a preset rule may be further considered for editing. For example, FIG. 12 is a schematic flowchart of an editing rule according to an embodiment of this application. The following steps may be included.

Step 1201: Detect an add operation or a drag operation on an editing and preview interface.

Step 1202: Determine whether there is an idle display area in a squeezing direction. If there is the idle display area in the squeezing direction, the method proceeds to step 1203A. If there is no idle display area in the squeezing direction, the method proceeds to step 1203B.

Step 1203A: Move display content synchronously in the squeezing direction.

Step 1203B: Display to-be-display content in a nearest display area in a plurality of idle display areas.

For content described in step 1201 to step 1203B, refer to the content described in FIG. 8A to FIG. 9B. Details are not described herein again.

Editing manner 3: Change a display sequence. For example, the electronic device may adjust display positions of a plurality of pieces of display content in the control panel in response to an operation instruction of the user for changing the positions of the display content in the editing and preview interface. For details, refer to the content described in FIG. 4C-1 to FIG. 4C-3.

For example, FIG. 13 is another schematic flowchart of an editing rule according to an embodiment of this application. The following steps may be included.

Step 1301: Detect a delete operation on an editing and preview interface.

Step 1302: Determine whether padding can be performed in a Y-axis direction. If padding can be performed in the Y-axis direction, the method proceeds to step 1303A. If padding cannot be performed in the Y-axis direction, the method proceeds to step 1303B.

Step 1303A: Move related display content synchronously in the Y-axis direction.

Step 1303B: Maintain a display position of related display content.

For content described in step 1301 to step 1303B, refer to the content described in FIG. 10A to FIG. 10C. Details are not described herein again.

Based on the foregoing embodiments, this application further provides an electronic device. The electronic device includes a plurality of functional modules. The plurality of functional modules interact with each other to implement functions performed by the electronic device in the methods described in embodiments of this application. The plurality of functional modules may be implemented based on software, hardware, or a combination of software and hardware, and the plurality of functional modules may be randomly combined or divided based on specific implementation. For example, steps 1101 and 1102 performed by the electronic device in the embodiment shown in FIG. 11 are performed. Alternatively, step 1201 to step 1203A or step 1203B performed by the electronic device in the embodiment shown in FIG. 12 may be further performed.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application. For example, steps 1101 and 1102 performed by the electronic device in the embodiment shown in FIG. 11 are performed. Alternatively, step 1201 to step 1203A or step 1203B performed by the electronic device in the embodiment shown in FIG. 12 may be further performed.

Based on the foregoing embodiments, this application further provides a computer program product. The computer program product includes a computer program (which may also be referred to as code or instructions). When the computer program is run, a computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component. A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A method for editing in a control panel, applied to an electronic device, comprising:
detecting a first operation instruction for an edit control comprised in the control panel interface; and
displaying a first editing interface of the control panel in response to the first operation instruction, wherein the first editing interface comprises a first editing area and a second editing area, the first editing area is used to edit a displayed shortcut switch, and the second editing area is used to edit a displayed smart device.

2. The method according to claim 1, wherein the first editing interface further comprises a first half-screen interface, the first half-screen interface comprises at least one of at least one candidate shortcut switch and at least one candidate combined shortcut switch, and the candidate shortcut switch and the candidate combined shortcut switch are not displayed in the control panel interface.

3. The method according to claim 2, wherein the method further comprises:
in response to a slide operation on the first editing interface, displaying the first half-screen interface when the first editing area is displayed in an initial display area of the first editing interface, wherein the first half-screen interface comprises at least one of the at least one candidate shortcut switch and the at least one candidate combined shortcut switch, and the candidate shortcut switch and the candidate combined shortcut switch are not displayed in the control panel interface.

4. The method according to any one of claims 1 to 3, wherein the first editing area further comprises a first add control, and the method further comprises:
displaying the first half-screen interface in the first editing interface in response to a second operation instruction for the first add control, wherein the first half-screen interface comprises at least one of the at least one candidate shortcut switch and the at least one candidate combined shortcut switch, and the candidate shortcut switch and the candidate combined shortcut switch are not displayed in the control panel interface.

5. The method according to any one of claims 2 to 4, wherein the method further comprises:
displaying a second editing interface in response to an add operation instruction for a first candidate shortcut switch or a first candidate combined shortcut switch comprised in the first half-screen interface, wherein the add operation instruction instructs to add the first candidate shortcut switch or the first candidate combined shortcut switch to the first editing area, and the first editing area comprised in the second editing interface comprises the first candidate shortcut switch or the first candidate combined shortcut switch.

6. The method according to any one of claims 2 to 5, wherein the method further comprises:
displaying a third editing interface in response to a delete operation instruction for a first shortcut switch or a first combined shortcut switch comprised in the first editing interface, and displaying the first shortcut switch or the first combined shortcut switch in the first half-screen interface, wherein the first shortcut switch or the first combined shortcut switch is no longer displayed in the third editing interface.

7. The method according to any one of claims 1 to 6, wherein the method further comprises:
in response to a slide operation on the first editing interface, displaying a second half-screen interface when the second editing area is displayed in the initial display area of the first editing interface, wherein the second half-screen interface comprises at least one of at least one candidate smart device and at least one candidate combined smart device, and the candidate smart device and the candidate combined smart device are not displayed in the control panel interface.

8. The method according to any one of claims 1 to 7, wherein the second editing area further comprises a second add control, and the method further comprises:
displaying the second half-screen interface in the first editing interface in response to a third operation instruction for the second add control, wherein the second half-screen interface comprises at least one of the at least one candidate smart device and the at least one candidate combined smart device, and the candidate smart device and the candidate combined smart device are not displayed in the control panel interface.

9. The method according to claim 7 or 8, wherein the method further comprises:
displaying a fourth editing interface in response to an add operation instruction for a first candidate smart device or a first candidate combined smart device comprised in the second half-screen interface, wherein the add operation instruction instructs to add the first candidate smart device or the first candidate combined smart device to the second editing area, and the second editing area comprised in the fourth editing interface comprises the first candidate smart device or the first candidate combined smart device.

10. The method according to any one of claims 7 to 9, wherein the method further comprises:
displaying a fifth editing interface in response to a delete operation instruction for a first smart device or a first combined smart device comprised in the first editing interface, and displaying the first smart device or the first combined smart device in the second half-screen interface, wherein the first smart device or the first combined smart device is no longer displayed in the fifth editing interface.

11. The method according to any one of claims 1 to 10, wherein the first editing interface further comprises a third editing area, and the third editing area is used to edit a displayed widget.

12. The method according to claim 11, wherein the method further comprises:
in response to a slide operation on the first editing interface, displaying a third half-screen interface when the third editing area is displayed in the initial display area of the first editing interface, wherein the third half-screen interface comprises at least one of at least one candidate widget and at least one candidate combined widget, and the candidate widget and the candidate combined widget are not displayed in the control panel interface.

13. The method according to claim 11 or 12, wherein the third editing area further comprises a third add control, and the method further comprises:
displaying the third half-screen interface in the first editing interface in response to a fourth operation instruction for the third add control, wherein the third half-screen interface comprises at least one of the at least one candidate widget and the at least one candidate combined widget, and the candidate widget and the candidate combined widget are not displayed in the control panel interface.

14. The method according to claim 12 or 13, wherein the method further comprises:
displaying a sixth editing interface in response to an add operation instruction for a first candidate widget or a first candidate combined widget comprised in the third half-screen interface, wherein the add operation instruction instructs to add the first candidate widget or the first candidate combined widget to the third editing area, and the third editing area comprised in the sixth editing interface comprises the first candidate widget or the first candidate combined widget.

15. The method according to any one of claims 12 to 14, wherein the method further comprises:
displaying a seventh editing interface in response to a delete operation instruction for a first widget or a first combined widget comprised in the first editing interface, and displaying the first widget or the first combined widget in the third half-screen interface, wherein the first widget or the first combined widget is no longer displayed in the seventh editing interface.

16. The method according to any one of claims 1 to 15, wherein the method further comprises:
displaying an eighth editing interface in response to a fifth operation instruction in the first editing interface, wherein
the fifth operation instruction instructs to display a first display object at a first display position, display positions of M display objects comprised in the eighth editing interface are different from display positions in the first editing interface, and the M display objects are determined based on an original display position of the first display object and the first display position; and
the first display object comprises a second shortcut switch or a second candidate shortcut switch, or a second combined shortcut switch or a second candidate shortcut switch, or a second smart device or a second candidate smart device, or a second combined smart device or a second candidate combined smart device, wherein M is a positive integer.

17. The method according to claim 16, wherein the M display objects are display objects that are located in a same column as the first display position.

18. The method according to any one of claims 1 to 17, wherein the method further comprises:
displaying a ninth editing interface in response to a sixth operation instruction in the first editing interface, wherein
the fifth operation instruction instructs to display a second display object at a second display position, the second display object is displayed at a third display position in the ninth editing interface, and the second display object is not capable of being displayed at the second display position; and
the second display object comprises a third shortcut switch or a third candidate shortcut switch, or a third combined shortcut switch or a third candidate shortcut switch, or a third smart device or a third candidate smart device, or a third combined smart device or a third candidate combined smart device.

19. The method according to claim 18, wherein there is no idle display area in a column in which the second display position is located.

20. The method according to claim 18 or 19, wherein the third display position is a display position that is in a plurality of idle display areas and that is closest to the second display position.

21. The method according to any one of claims 1 to 20, wherein the method further comprises:
displaying a tenth editing interface in response to a delete operation instruction for a third display object comprised in the first editing interface, wherein display positions of N display objects comprised in the tenth editing interface are different from display positions in the first editing interface, the N display objects are display objects that are located in a same column of the third display object and that are below a display position of the third display object, and a quantity of columns in which the N display objects are located is less than or equal to a quantity of columns in which the third display object is located; and
the third display object comprises a fourth shortcut switch or a fourth candidate shortcut switch, or a fourth combined shortcut switch or a fourth candidate shortcut switch, or a fourth smart device or a fourth candidate smart device, or a fourth combined smart device or a fourth candidate combined smart device, wherein N is a positive integer.

22. A method for editing in a control panel, applied to an electronic device, comprising:
detecting a first operation instruction for an edit control comprised in the control panel interface; and
displaying a first editing interface of the control panel in response to the first operation instruction, wherein the first editing interface comprises a first editing area, a second editing area, and a third editing area, the first editing area is used to edit a displayed shortcut switch, the second editing area is used to edit a displayed smart device, and the third editing area is used to edit a displayed widget; and
the first editing interface further comprises a first half-screen interface or a third half-screen interface, the first half-screen interface comprises at least one of at least one candidate shortcut switch and at least one candidate combined shortcut switch, and the candidate shortcut switch and the candidate combined shortcut switch are not displayed in the control panel interface; the third half-screen interface comprises at least one of at least one candidate widget and at least one candidate combined widget, and the candidate widget and the candidate combined widget are not displayed in the control panel interface.

23. The method according to claim 22, wherein the third editing area is displayed above the first editing area, the first editing area is displayed above the second editing area, and the method further comprises:
in response to a slide operation on the first editing interface, displaying the first half-screen interface when it is detected that the third editing area is no longer displayed in the first editing interface; and
displaying a second half-screen interface when it is detected that the first editing area is no longer displayed in the first editing interface, wherein the second half-screen interface comprises at least one of at least one candidate smart device and at least one candidate combined smart device, and the candidate smart device and the candidate combined smart device are not displayed in the control panel interface.

24. An electronic device, comprising at least one processor, wherein the at least one processor is coupled to at least one memory, and the at least one processor is configured to read a computer program stored in the at least one memory, to perform the method according to any one of claims 1 to 21, or perform the method according to claim 22 or 23.

25. A computer-readable storage medium, wherein the computer-readable storage medium stores instructions, and when the instructions are run on a computer, the computer is enabled to perform the method according to any one of claims 1 to 21, or perform the method according to claim 22 or 23.

26. A computer program product comprising instructions, wherein when the computer program product runs on a computer, the computer is enabled to perform the method according to any one of claims 1 to 21, or perform the method according to claim 22 or 23.
